# EUROPÄISCHE PATENTSCHRIFT

(11) **EP 0 625 549 B1**
(45) Veröffentlichungstag und Bekanntmachung des Hinweises auf die Patenterteilung: **01.07.1998**
(21) Anmeldenummer: 94810276.9
(22) Anmeldetag: 09.05.1994
(51) Int. Cl.: C09B 62/04, C09B 62/503, C09B 62/002

(54) **Reaktivfarbstoffe, Verfahren zu deren Herstellung und deren Verwendung**
Reactive dyes, process for their preparation and the use thereof
Colorants réactifs, procédé pour leur préparation et leur utilisation

(30) Priorität: 17.05.1993 CH 1494/93; 29.06.1993 CH 1950/93
(43) Veröffentlichungstag der Anmeldung: 23.11.1994
(73) Patentinhaber: Ciba Specialty Chemicals Holding Inc., 4057 Basel (CH)
(72) Erfinder: Klier, Herbert, D-79189 Bad Krozingen-Biengen (DE); Müller, Bernhard, Dr., D-79588 Efringen-Kirchen (DE); Ruhlmann, Edmond, Dr., F-68300 Saint-Louis (FR); Tzikas, Athanassios, Dr., CH-4133 Pratteln (CH)

(56) Entgegenhaltungen:
- EP-A- 0 391 264
- EP-A- 0 478 503
- EP-A- 0 511 523
- CH-A- 621 358
- GB-A- 854 432
- GB-A- 2 085 908

## Beschreibung

Die vorliegende Erfindung betrifft neue Reaktivfarbstoffe, Verfahren zu deren Herstellung und deren Verwendung zum Färben oder Bedrucken von Fasermaterialien.

Die Praxis des Färbens mit Reaktivfarbstoffen hat in neuerer Zeit zu erhöhten Anforderungen an die Qualität der Färbungen und die Wirtschaftlichkeit des Färbeprozesses geführt. Infolge dessen besteht weiterhin ein Bedarf nach neuen Reaktivfarbstoffen, welche verbesserte Eigenschaften, insbesondere in bezug auf die Applikation, aufweisen.

Für das Färben werden heute Reaktivfarbstoffe gefordert, die eine ausreichende Substantivität haben und die zugleich eine gute Auswaschbarkeit der nicht fixierten Anteile aufweisen. Sie sollen ferner eine gute färberische Ausbeute aufweisen und hohe Reaktivität besitzen, wobei insbesondere Färbungen mit hohen Fixiergraden geliefert werden sollen. Von den bekannten Farbstoffen werden diese Anforderungen nicht in allen Eigenschaften erfüllt.

Der vorliegenden Erfindung liegt daher die Aufgabe zugrunde, neue, verbesserte Reaktivfarbstoffe für das Färben und Bedrucken von Fasermaterialien zu finden, welche die oben charakterisierten Qualitäten in hohem Masse besitzen. Die neuen Farbstoffe sollten sich vor allem durch hohe Fixierausbeuten und hohe Faser-Farbstoff-Bindungsstabilitäten auszeichnen, und ausserdem sollten die nicht auf der Faser fixierten Anteile leicht auswaschbar sein. Sie sollten ferner Färbungen mit guten Allgemeinechtheiten, beispielsweise Licht- und Nassechtheiten, ergeben.

Es hat sich gezeigt, dass mit den weiter unten definierten Reaktivfarbstoffen die gestellte Aufgabe weitgehend gelöst wird.

Gegenstand der Erfindung sind daher Reaktivfarbstoffe der Formel 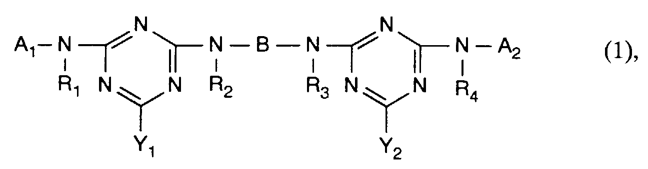 worin
R₁, R₂, R₃ und R₄ unabhängig voneinander Wasserstoff oder gegebenenfalls substituiertes C₁-C₄-Alkyl sind,
B ein aliphatisches Brückenglied ist,
Y₁ und Y₂ unabhängig voneinander Halogen oder Carboxypyridinium bedeuten,
A₁ den Rest eines Anthrachinon-, Formazan- oder Disazofarbstoffes, oder einen Rest der Formel 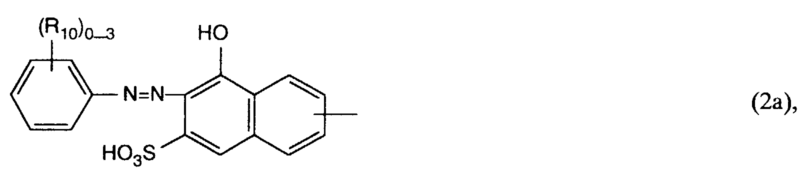 worin R₁₀ für 0 bis 3 gleiche oder verschiedene Substituenten aus der Gruppe C₁-C₄-Alkyl, C₁-C₄-Alkoxy, Halogen, Carboxy und Sulfo steht, 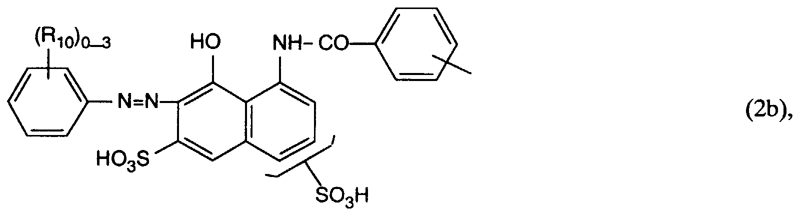 worin R₁₀ für 0 bis 3 gleiche oder verschiedene Substituenten aus der Gruppe C₁-C₄-Alkyl, C₁-C₄-Alkoxy, Halogen, Carboxy und Sulfo steht, 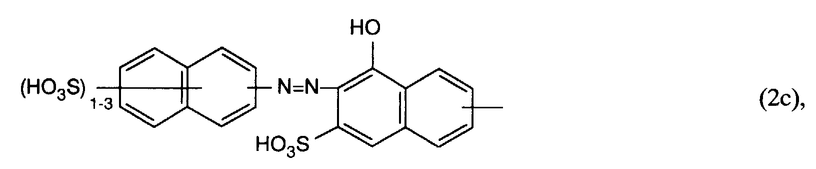 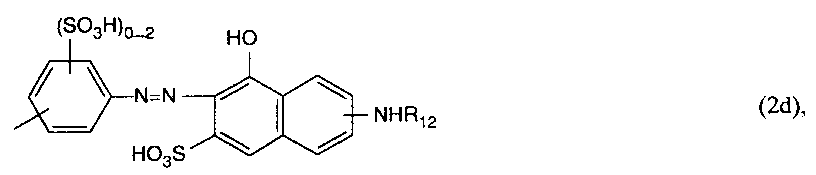 worin R₁₂ C₁-C₄-Alkanoyl, Benzoyl oder ein gegebenenfalls weitersubstituierter Halogentriazinylrest ist, 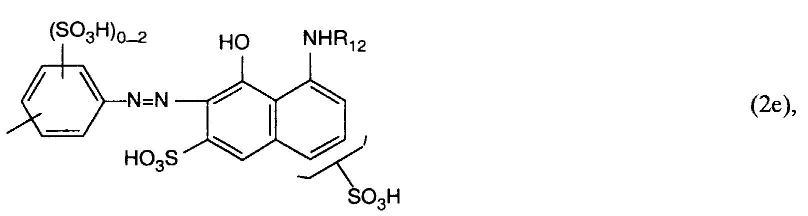 worin R₁₂ C₁-C₄-Alkanoyl, Benzoyl oder ein gegebenenfalls weitersubstituierter Halogentriazinylrest ist, 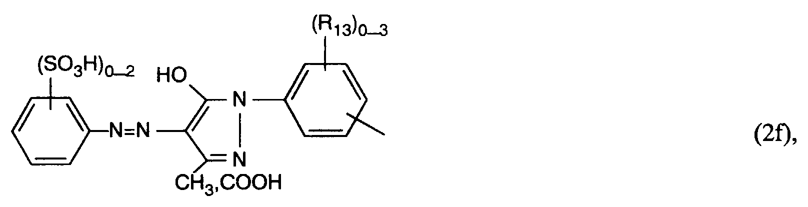 worin R₁₃ für 0 bis 3 gleiche oder verschiedene Substituenten aus der Gruppe C₁-C₄-Alkyl, C₁-C₄-Alkoxy, Halogen, Carboxy und Sulfo steht, oder 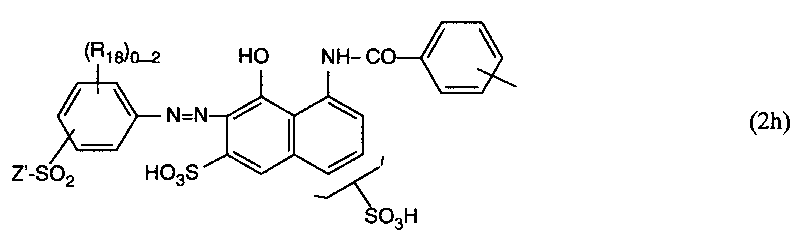 worin R₁₈ für 0 bis 2 gleiche oder verschiedene Substituenten aus der Gruppe C₁-C₄-Alkyl, C₁-C₄-Alkoxy, Halogen, Carboxy und Sulfo steht; und Z' β-Sulfatoäthyl,
   β-Thiosulfatoäthyl, β-Phosphatoäthyl, β-Acyloxyäthyl, β-Halogenäthyl oder Vinyl ist, bedeutet, und
A₂ die oben für A₁ angegebenen Bedeutungen hat oder einen Rest der Formel 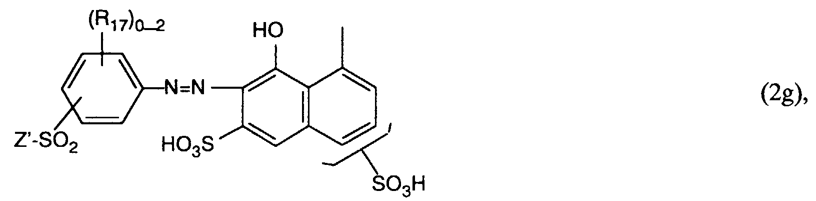 worin R₁₇ für 0 bis 2 gleiche oder verschiedene Substituenten aus der Gruppe C₁-C₄-Alkyl, C₁-C₄-Alkoxy, Halogen, Carboxy und Sulfo steht; und Z' β-Sulfatoäthyl, β-Thiosulfatoäthyl, β-Phosphatoäthyl, β-Acyloxyäthyl, β-Halogenäthyl oder Vinyl ist, 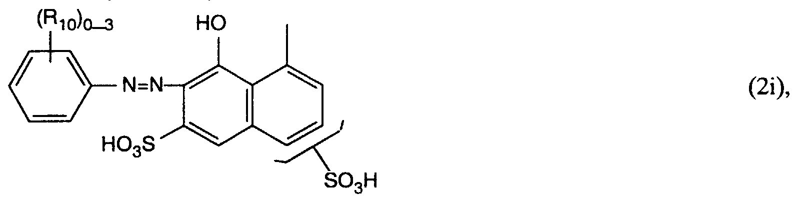 worin R₁₀ für 0 bis 3 gleiche oder verschiedene Substituenten aus der Gruppe C₁-C₄-Alkyl, C₁-C₄-Alkoxy, Halogen, Carboxy und Sulfo steht, 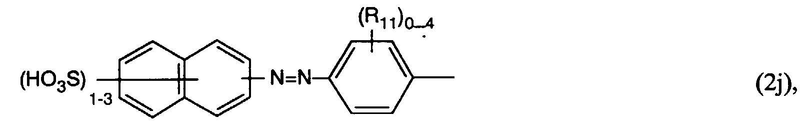 worin R₁₁ für 0 bis 4 gleiche oder verschiedene Substituenten aus der Gruppe Halogen, Nitro, Cyan, Trifluormethyl, Sulfamoyl, Carbamoyl, C₁-C₄-Alkyl, C₁-C₄-Alkoxy, Amino, Acetylamino, Ureido, Hydroxy, Carboxy, Sulfomethyl und Sulfo steht, 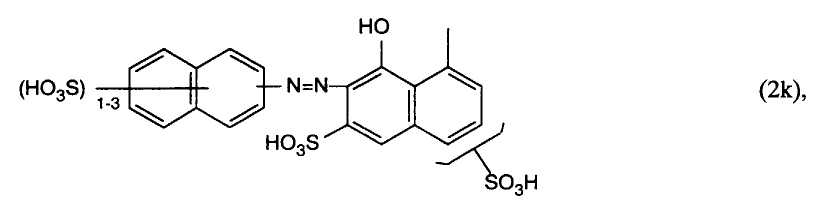 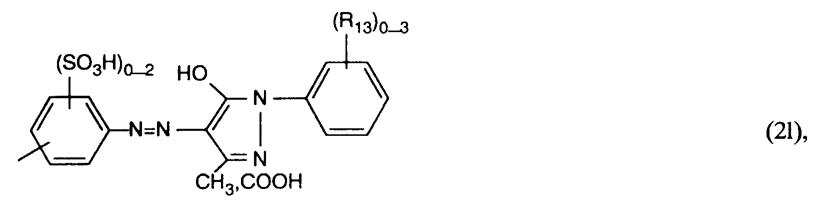 worin R₁₃ für 0 bis 3 gleiche oder verschiedene Substituenten aus der Gruppe C₁-C₄-Alkyl, C₁-C₄-Alkoxy, Halogen, Carboxy und Sulfo steht, oder 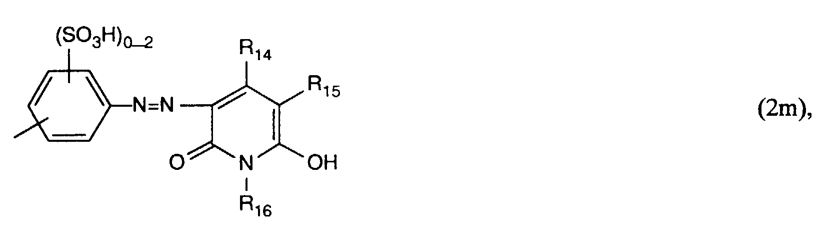 worin R₁₄ und R₁₆ unabhängig voneinander Wasserstoff, C₁-C₄-Alkyl oder Phenyl, und
R₁₅ Wasserstoff, Cyano, Carbamoyl oder Sulfomethyl ist,
   bedeutet, wobei
A₁ und A₂ voneinander verschiedene Bedeutungen haben.

Aus der EP-A-0 478 503 sind Reaktivfarbstoffe der Formel (1) bekannt, worin A₁ und A₂ identische Bedeutungen haben. Aus der EP-A-0 511 523 sowie der GB-A-2 085 908 sind Reaktivfarbstoffe bekannt, welche sich von den erfindungsgemässen Farbstoffen hinsichtlich des Restes A₁ unterscheiden.

Die Reste R₁, R₂, R₃ und R₄ im Reaktivfarbstoff der Formel (1) sind als Alkylreste geradkettig oder verzweigt; die Alkylreste können weitersubstituiert sein, z.B. durch Halogen, Hydroxy, Cyan, C₁-C₄-Alkoxy, C₁-C₄-Alkoxycarbonyl, Carboxy, Sulfamoyl, Sulfo oder Sulfato. Als Beispiele für R₁, R₂, R₃ und R₄ seien die folgenden Reste genannt: Methyl, Aethyl, Propyl, Isopropyl, Butyl, Isobutyl, sek.-Butyl, tert.-Butyl, Carboxymethyl, β-Carboxyäthyl, β-Carboxypropyl, Methoxycarbonylmethyl, Aethoxycarbonylmethyl, β-Methoxyäthyl, β-Aethoxyäthyl, β-Methoxypropyl, β-Chloräthyl, γ-Brompropyl, β-Hydroxyäthyl, β-Hydroxybutyl, β-Cyanäthyl, Sulfomethyl, β-Sulfoäthyl, Aminosulfonylmethyl und β-Sulfatoäthyl. Vorzugsweise sind R₁, R₂, R₃ und R₄ unabhängig voneinander Wasserstoff, Methyl oder Aethyl, insbesondere Wasserstoff.

Das aliphatische Brückenglied B im Reaktivfarbstoff der Formel (1) ist vorzugsweise ein C₂-C₁₂-Alkylenrest, welcher durch 1, 2 oder 3 Glieder aus der Gruppe -NH-, -N(CH₃)- oder -O- unterbrochen sein kann und gegebenenfalls durch Hydroxyl, Sulfo oder Sulfato substituiert ist.

Bevorzugt ist das Brückenglied B im Reaktivfarbstoff der Formel (1) ein C₂-C₁₂-Alkylenrest, welcher durch 1, 2 oder 3 Reste -O- unterbrochen sein kann.

Besonders bevorzugt ist das Brückenglied B im Reaktivfarbstoff der Formel (1) ein C₂-C₆-Alkylenrest, insbesondere ein Rest der Formel 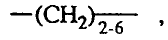 vorzugsweise Äthylen oder Propylen.

Die Reste Y₁ und Y₂ im Reaktivfarbstoff der Formel (1) bedeuten unabhängig voneinander insbesondere Fluor oder Chlor.

Die Reste A₁ und A₂ im Reaktivfarbstoff der Formel (1) können als Rest eines Anthrachinon-, Formazan- oder Disazofarbstoffes an ihrem Grundgerüst die bei organischen Farbstoffen üblichen Substituenten gebunden enthalten.

Als Beispiele für Substituenten im Rest A₁ und A₂ seien genannt: Alkylgruppen mit 1 bis 4 Kohlenstoffatomen, wie Methyl, Aethyl, Propyl, Isopropyl oder Butyl, wobei die Alkylreste z.B. durch Hydroxyl, Sulfo oder Sulfato weitersubstituiert sein können; Alkoxygruppen mit 1 bis 4 Kohlenstoffatomen, wie Methoxy, Aethoxy, Propoxy, Isopropoxy oder Butoxy, wobei die Alkylreste z.B. durch Hydroxyl, Sulfo oder Sulfato weitersubstituiert sein können; gegebenenfalls durch C₁-C₄-Alkyl, C₁-C₄-Alkoxy, Halogen, Carboxy oder Sulfo substituiertes Phenyl; Acylaminogruppen mit 1 bis 8 Kohlenstoffatomen, insbesondere solche Alkanoylaminogruppen, wie z.B. Acetylamino oder Propionylamino; gegebenenfalls im Phenylring durch C₁-C₄-Alkyl, C₁-C₄-Alkoxy, Halogen oder Sulfo substituiertes Benzoylamino; gegebenenfalls im Phenylring durch C₁-C₄-Alkyl, C₁-C₄-Alkoxy, Halogen oder Sulfo substituiertes Phenylamino; N,N-Di-β-hydroxyäthylamino; N,N-Di-β-sulfatoäthylamino; Sulfobenzylamino; N,N-Disulfobenzylamino; Alkoxycarbonyl mit 1 bis 4 Kohlenstoffatomen im Alkoxyrest, wie Methoxycarbonyl oder Aethoxycarbonyl; Alkylsulfonyl mit 1 bis 4 Kohlenstoffatomen, wie Methylsulfonyl oder Aethylsulfonyl; Trifluormethyl; Nitro; Amino; Cyano; Halogen, wie Fluor, Chlor oder Brom; Carbamoyl; N-Alkylcarbamoyl mit 1 bis 4 Kohlenstoffatomen im Alkylrest, wie N-Methylcarbamoyl oder N-Aethylcarbamoyl; Sulfamoyl; N-Mono- oder N,N-Dialkylsulfamoyl mit jeweils 1 bis 4 Kohlenstoffatomen, wie N-Methylsulfamoyl, N-Aethylsulfamoyl, N-Propylsulfamoyl, N-Isopropylsulfamoyl oder N-Butylsulfamoyl, wobei die Alkylreste z.B. durch Hydroxy oder Sulfo weitersubstituiert sein können; N-(β-Hydroxyäthyl)-sulfamoyl; N,N-Di-(β-hydroxyäthyl)-sulfamoyl; gegebenenfalls durch C₁-C₄-Alkyl, C₁-C₄-Alkoxy, Halogen, Carboxy oder Sulfo substituiertes N-Phenylsulfamoyl; Ureido; Hydroxy; Carboxy; Sulfomethyl oder Sulfo sowie faserreaktive Reste.

Die Reste A₁ und A₂ enthalten bevorzugt jeweils mindestens eine Sulfogruppe, insbesondere 1 bis 4 Sulfogruppen und vorzugsweise 1 bis 3 Sulfogruppen.

Eine Reaktivgruppe im Rest A₁ oder A₂ in der Bedeutung als Rest eines Anthrachinon-, Formazan- oder Disazofarbstoffes ist beispielsweise ein durch ein abspaltbares Atom oder eine abspaltbare Gruppe substituierter Alkanoyl- oder Alkylsulfonylrest, ein gegebenenfalls durch ein abspaltbares Atom oder eine abspaltbare Gruppe substituierter Alkenoyl- oder Alkensulfonylrest oder ein eine Vinylgruppe enthaltender Alkenoyl- oder Alkensulfonylrest. Die genannten Alkanoyl-, Alkylsulfonyl- und Alkensulfonylreste enthalten in der Regel 2 bis 8 Kohlenstoffatome und die Alkenoylreste in der Regel 3 bis 8 Kohlenstoffatome. Des weiteren sind durch ein abspaltbares Atom oder eine abspaltbare Gruppe substituierte carbo- oder heterocyclische 4-, 5- oder 6-Ringe enthaltende Reste zu nennen. Als heterocyclische Reste kommen z.B. solche in Betracht, welche mindestens einen abspaltbaren Substituenten an einen heterocyclischen Rest gebunden enthalten; unter anderem solche, die mindestens einen reaktiven Substituenten an einen 5- oder 6-gliedrigen heterocyclischen Ring gebunden enthalten, wie an einen Monoazin-, Diazin-, Triazin- , Pyridin-, Pyrimidin-, Pyridazin-, Pyrazin-, Thiazin-, Oxazin- oder asymmetrischen oder symmetrischen Triazinring, oder an ein derartiges Ringsystem, welches einen oder mehrere ankondensierte aromatische Ringe aufweist, wie ein Chinolin-, Phthalazin-, Chinnolin-, Chinazolin-, Chinoxalin-, Acridin-, Phenazin- und Phenanthridin-Ring-System.

Abspaltbare Atome bzw. abspaltbare Gruppen sind neben weiteren beispielsweise Halogen, wie Fluor, Chlor oder Brom, Ammonium einschliesslich Hydrazinium, Sulfato, Thiosulfato, Phosphato, Acetoxy, Propionoxy, Azido, Carboxypyridinium oder Rhodanido.

Als Brückenglied zwischen dem Farbstoffrest und dem faserreaktiven Rest kommen neben der direkten Bindung die verschiedensten Reste in Betracht. Das Brückenglied ist z.B. ein aliphatischer, aromatischer oder heterocyclischer Rest; ferner kann das Brückenglied auch aus verschiedenen derartigen Resten zusammengesetzt sein. Das Brückenglied enthält in der Regel mindestens eine funktionelle Gruppe, z.B. die Carbonylgruppe oder die Aminogruppe, wobei die Aminogruppe durch gegebenenfalls durch Halogen, Hydroxy, Cyan, C₁-C₄-Akoxy, C₁-C₄-Alkoxycarbonyl, Carboxy, Sulfamoyl, Sulfo oder Sulfato substituiertes C₁-C₄-Alkyl weitersubstituiert sein kann. Als aliphatischer Rest kommt z.B. ein Alkylenrest mit 1 bis 7 Kohlenstoffatomen oder dessen verzweigte Isomere in Betracht. Die Kohlenstoffkette des Alkylenrestes kann durch ein Heteroatom, wie z.B. ein Sauerstoffatom, unterbrochen sein. Als aromatischer Rest kommt z.B. ein Phenylrest, der durch C₁-C₄-Alkyl, wie z.B. Methyl oder Aethyl, C₁-C₄-Alkoxy, wie z.B. Methoxy oder Aethoxy, Halogen, wie z.B. Fluor, Brom oder insbesondere Chlor, Carboxy oder Sulfo substituiert sein kann, und als heterocyclischer Rest z.B. ein Piperazinrest in Betracht.

Als Beispiele für Reaktivgruppen seien die folgenden genannt: Vinylsulfonyl, β-Chloräthylsulfonyl, β-Sulfatoäthylsulfonyl, β-Acetoxy-äthylsulfonyl, Phosphatoäthylsulfonyl, β-Thiosulfatoäthylsulfonyl,, N-Methyl-N-(β-sulfoäthyl-sulfonyl)-amino, Acryloyl, Mono-, Di- oder Trichloracryloyl wie -CO-CCl=CH₂, -CO-CH=CH-Cl, -CO-CCl=CH-CH₃; Mono-, Di- oder Tribromacryloyl wie -CO-CBr=CH₂, -CO-CH=CH-Br, -CO-CBr=CH-CH₃; sowie -CO-CCl=CH-COOH, -CO-CH=CCl-COOH, -CO-CBr=CH-COOH, -CO-CH=CBr-COOH, -CO-CCl=CCl-COOH, -CO-CBr=CBr-COOH; Vorstufen des Acryloylrestes und der Derivate des Acryloylrestes wie β-Chlor- oder β-Brompropionyl, 3-Phenylsulfonylpropionyl, 3-Methylsulfonylpropionyl, 2-Chlor-3-phenylsulfonylpropionyl, 2,3-Dichlorpropionyl, 2,3-Dibrompropionyl; sowie 2-Fluor-2-chlor-3,3-difluorcyclobutan-1-carbonyl, 2,2,3,3-Tetrafluorcyclobutancarbonyl-1-oder sulfonyl-1-, β-(2,2,3,3-Tetrafluorcyclobutyl-1)-acryloyl, α- oder β-Alkenyl- oder Arylsulfonylacryloylgruppen, wie α- oder β-Methylsulfonylacryloyl, Chloracetyl, Bromacetyl, 4-(β-Chloräthylsulfonyl)-butyryl, 4-Vinylsulfonyl-butyryl, 5-(β-Chloräthylsulfonyl)-caproyl, 6-Vinylsulfonylcaproyl; sowie 4-Fluor-3-nitro-benzoyl, 4-Fluor-3-nitrophenylsulfonyl, 4-Fluor-3-methylsulfonylbenzoyl, 4-Fluor-3-cyanbenzoyl, 2-Fluor-5-methylsulfonylbenzoyl.

Des weiteren sind beispielsweise folgende faserreaktiven Reste zu nennen: Mono- oder Dihalogen-symmetrische-triazinylreste, z.B. 2,4-Dichlortriazinyl-6-, 2-Amino-4-chlortriazinyl-6-, 2-Alkyl-amino-4-chlortriazinyl-6-, wie 2-Methylamino-4-chlortriazinyl-6-, 2-Ethylamino- oder 3-Propylamino-4-chlortriazinyl-6-, 2-β-Oxethylamino-4-chlortriazinyl-6-, 2-Di-β-oxethylamino-4-chlortriazinyl-6- und die entsprechenden Schwefelsäurehalbester, 2-Diethylamino-4-chlortriazinyl-6-, 2-Morpholino- oder 2-Piperidino-4-chlor-triazinyl-6-, 2-Cyclohexylamino-4-chlortriazinyl-6-, 2-Arylamino- und substituiertes Arylamino-4-chlortriazinyl-6-, wie 2-Phenylamino-4-chlortriazinyl-6-, 2-(o-, m- oder p-Carboxy- oder Sulfophenyl)-amino-4-chlortriazinyl-6-, 2-Alkoxy-4-chlortriazinyl-6-, wie 2-Methoxy- oder Ethoxy-4-chlortriazinyl-6-, 2-(Phenylsulfonylmethoxy)-4-chlortriazinyl-6-, 2-Aryloxy und substituiertes Aryloxy-4-chlortriazinyl-6-, wie 2-Phenoxy-4-chlortriazinyl-6-, 2-(p-Sulfophenyl)-oxi-4-chlortriazinyl-6-, 2-(o-, m- oder p-Methyl- oder Methoxyphenyl)-oxi-4-chlortriazinyl-6-, 2-Alkylmercapto- oder 2-Arylmercapto- oder 2-(substituiertes Aryl)-mercapto-4-chlortriazinyl-6-, wie 2-β-Hydroxyethyl-mercapto-4-chlortriazinyl-6-, 2-Phenylmercapto-4-chlortriazinyl-6-, 3-(4'-Methylphenyl)-mercapto-4-chlortriazinyl-6-, 2-(2',4'-Dinitro)-Phenylmercapto-4-chlortriazinyl-6-, 2-Methyl-4-chlortriazinyl-6-, 2-Phenyl-4-chlortriazinyl-6-, 2,4-Difluortriazinyl-6-, Monofluortriazinylreste, die durch Amino-, Alkylamino-, Aralkylamino- oder Acylaminogruppen substituiert sind, wobei Alkyl insbesondere gegebenenfalls substituiertes C₁-C₄-Alkyl, Aralkyl insbesondere gegebenenfalls substituiertes Phenyl-C₁-C₄-Alkyl und Aryl insbesondere gegebenenfalls durch Sulfo, C₁-C₄-Alkyl, C₁-C₄-Alkoxy, Carbonsäure-, Acylaminogruppen und Halogenatome wie Fluor, Chlor oder Brom substituiertes Phenyl oder Naphthyl bedeutet, beispielsweise 2-Amino-4-fluortriazinyl-6, 2-Methylamino-4-fluortriazinyl-6, 2-Ethylamino-4-fluortriazinyl-6, 2-iso-Propylamino-4-fluortriazinyl-6, 2-Dimethylamino-4-fluortriazinyl-6, 2-Diethylamino-4-fluortriazinyl-6, 2-β-Methoxyethylamino-4-fluortriazinyl-6, 2-β-Hydroxyethylamino-4-fluortriazinyl-6, 2-Di-(β-hydroxyethylamino)-4-fluortriazinyl-6-, 2-β-Sulfoethylamino-4-fluortriazinyl-6, 2-β-Sulfoethyl-methylamino-4-fluortriazinyl-6, 2-Carboxymethylamino-4-fluortriazinyl-6, 2-β-Cyanethylamino-4-fluortriazinyl-6, 2-Benzylamino-4-fluortriazinyl-6, 2-β-Phenylethylamino-4-fluortriazinyl-6, 2-Benzyl-methylamino-4-fluortriazinyl-6, 2-(2'-, 3'- oder 4'-Sulfobenzyl)-amino-4-fluortriazinyl-6, 2-Cyclohexylamino-4-fluortriazinyl-6, 2-(o-, m-, p-Methylphenyl)-amino-4-fluortriazinyl-6, 2-(o-, m-, p-Sulfophenyl)-amino-4-fluortriazinyl-6, 2-(2',5'-Disulfophenyl)-amino-4-fluortriazinyl-6, 2-(o-, m-, p-Chlorphenyl)-amino-4-fluortriazinyl-6, 2-(o-, m-, p-Methoxyphenyl)-4-fluortriazinyl-6, 2-(2'-Methyl-4'-sulfophenyl)-amino-4-fluortriazinyl-6, 2-(2'-Methyl-5'-sulfophenyl)-amino-4-fluortriazinyl-6, 2-(2'-Chlor-4'-sulfophenyl)-amino-4-fluortriazinyl-6, 2-(2'-Chlor-5'-sulfophenyl)-amino-4-fluortriazinyl-6, 2-(2'-Methoxy-4'-sulfophenyl)-amino-4-fluortriazinyl-6, 2-(o-, m-, p-Carboxyphenyl)-amino-4-fluortriazinyl-6, 2-(2',4'-Disulfophenyl)-amino-4-fluortriazinyl-6, 2-(3',5'-Disulfophenyl)-amino-4-fluortriazinyl-6, 2-(2'-Carboxy-4-sulfophenyl)-amino-4-fluortriazinyl-6, 2-(2'-Carboxy-4-sulfophenyl)-amino-4-fluortriazinyl-6, 2-(6'-Sulfonaphthyl-(2')-amino-4-fluortriazinyl-6, 2-(4',8'-Disulfonaphthyl-(2'))-amino-4-fluortriazinyl-6, 2-(6',8'-Disulfonaphthyl-(2'))-amino-4-fluortriazinyl-6, 2-(N-Methylphenyl)-amino-4-fluortriazinyl-6, 2-(N-Ethylphenyl)-amino-4-fluortriazinyl-6, 2-(N-β-Hydroxyethylphenyl)-amino-4-fluortriazinyl-6, 2-(N-iso-Propylphenyl)-amino-4-fluortriazinyl-6, 2-Morpholino-4-fluortriazinyl-6, 2-Piperidino-4-fluortriazinyl-6, 2-(4',6',8'-Trisulfonaphthyl-(2'))-4-fluortriazinyl-6, 2-(3',6',8'-Trisulfonaphthyl-(2'))-4-fluortriazinyl-6, 2-(3',6'-Disulfonaphthyl-(1'))-4-fluortriazinyl-6, Mono-, Di- oder Trihalogenpyrimidinylreste, wie 2,4-Dichlorpyrimidinyl-6, 2,4,5-Trichlorpyrimidinyl-6-, 2,4-Dichlor-5-nitro- oder -5-methyl- oder -5-carboxymethyl- oder -5-carboxy- oder -5-cyano- oder -5-vinyl- oder -5-sulfo- oder -5-mono-, -di- oder -trichlormethyl- oder -5-carboalkoxy-pyrimidinyl-6, 2,6-Dichlorpyrimidin-4-carbonyl-, 2,4-Dichlorpyrimidin-5-carbonyl-, 2-Chlor-4-methylpyrimidin-5-carbonyl-, 2-Methyl-4-chlorpyrimidin-5-carbonyl-, 2-Methylthio-4-fluorpyrimidin-5-carbonyl-, 6-Methyl-2,4-dichlorpyrimidin-5-carbonyl-, 2,4,6-Trichlorpyrimidin-5-carbonyl-, 2,4-Dichlorpyrimidin-5-sulfonyl-, 2-Chlorchinoxalin-3-carbonyl-, 2- oder 3-Monochlorchinoxalin-6-carbonyl-, 2- oder 3-Monochlorchinoxalin-6-sulfonyl-, 2,3-Dichlorchinoxalin-6-carbonyl-, 2,3-Dichlorchinoxalin-6-sulfonyl-, 1,4-Dichlorphthalazin-6-sulfonyl- oder -6-carbonyl-, 2,4-Dichlorchinazolin-7- oder -6-sulfonyl- oder -carbonyl-, 2- oder 3- oder 4-(4',5'-Dichlorpyridazin-6'-yl-1')-phenylsulfonyl- oder -carbonyl-, β-(4',5'-Dichlorpyridazon-6'-yl-1')-ethyl-carbonyl, N-Methyl-N-(2,4-dichlortriazinyl-6)-carbamyl-, N-Methyl-N-(2-methylamino-4-chlortriazinyl-6)-carbamyl-, N-Methyl-N-(2-dimethylamino-4-chlortriazinyl-6)-carbamyl, N-Methyl- oder N-Ethyl-N-(2,4-dichlortriazinyl-6)-amino-acetyl-, N-Methyl-N-(2,3-dichlorchinoxalin-6-sulfonyl)-aminoacetyl-, N-Methyl-N-(2,3-dichlorchinoxalin-6-carbonyl)-aminoacetyl-, sowie die entsprechenden Brom- und Fluor-Derivate der oben erwähnten chlorsubstituierten heterocyclischen Reste, unter diesen beispielsweise 2-Fluor-4-pyrimidinyl-, 2,6-Difluor-4-pyrimidinyl-, 2,6-Difluor-5-chlor-4-pyrimidinyl-, 2-Fluor-5,6-dichlor-4-pyrimidinyl-, 2,6-Difluor-5-methyl-4-pyrimidinyl-, 2,5-Difluor-6-methyl-4-pyrimidinyl-, 2-Fluor-5-methyl-6-chlor-4-pyrimidinyl-, 2-Fluor-5-nitro-6-chlor-4-pyrimidinyl-, 5-Brom-2-fluor-4-pyrimidinyl-, 2-Fluor-5-cyan-4-pyrimidinyl-, 2-Fluor-5-methyl-4-pyrimidinyl-, 2,5,6-Trifluor-4-pyrimidinyl-, 5-Chlor-6-chlormethyl-2-fluor-4-pyrimidinyl-, 2,6-Difluor-5-brom-4-pyrimidinyl-, 2-Fluor-5-brom-6-methyl-4-pyrimidinyl-, 2-Fluor-5-brom-6-chlormethyl-4-pyrimidinyl-, 2,6-Difluor-5-chlormethyl-4-pyrimidinyl-, 2,6-Difluor-5-nitro-4-pyrimidinyl-, 2-Fluor-6-methyl-4-pyrimidinyl-, 2-Fluor-5-chlor-6-methyl-4-pyrimidinyl-, 2-Fluor-5-chlor-4-pyrimidinyl- 2-Fluor-6-chlor-4-pyrimidinyl-, 6-Trifluormethyl-5-chlor-2-fluor-4-pyrimidinyl-, 6-Trifluormethyl-2-fluor-4-pyrimidinyl-, 2-Fluor-5-nitro-4-pyrimidinyl-, 2-Fluor-5-trifluormethyl-4-pyrimidinyl-, 2-Fluor-5-phenyl- oder -5-methylsulfonyl-4-pyrimidinyl-, 2-Fluor-5-carbonamido-4-pyrimidinyl-, 2-Fluor-5-carbomethoxy-4-pyrimidinyl-, 2-Fluor-5-brom-6-trifluormethyl-4-pyrimidinyl-, 2-Fluor-6-carbonamido-4-pyrimidinyl-, 2-Fluor-6-carbomethoxy-4-pyrimidinyl, 2-Fluor-6-phenyl-4-pyrimidinyl-, 2-Fluor-6-cyan-4-pyrimidinyl-, 2,6-Difluor-5-methylsulfonyl-4-pyrimidinyl-, 2-Fluor-5-sulfonamido-4-pyrimidinyl-, 2-Fluor-5-chlor-6-carbomethoxy-4-pyrimidinyl-, 2,6-Difluor-5-trifluormethyl-4-pyrimidinyl-, 6-Fluor-5-chlor-pyrimidinyl-4, 6-Fluor-5-trifluormethyl-pyrimidinyl-4, 6-Fluor-2-methylpyrimidinyl-4, 6-Fluor-5-chlor-2-methylpyrimidinyl-4, 5,6-Difluorpyrimidinyl-4, -4, 6-Fluor-5-chlor-2-trifluormethylpyrimidinyl-4, 6-Fluor-2-phenylpyrimidinyl-4, 6-Fluor-5-cyan-pyrimidinyl-4, 6-Fluor-5-nitropyrimidinyl-4, 6-Fluor-5-methylsulfonyl-pyrimidinyl-4, 6-Fluor-5-phenylsulfonylpyrimidinyl-4, sulfonylgruppenhaltige Triazinreste, wie 2,4-Bis-(phenylsulfonyl)-triazinyl-6, 2-(3'-Carboxyphenyl)-sulfonyl-4-chlortriazinyl-6, 2-(3'-Sulfophenyl)-sulfonyl-4-chlortriazinyl-6, 2,4-Bis-(3'-carboxyphenylsulfonyl)-triazinyl-6; sulfonylgruppenhaltige Pyrimidinringen, wie 2-Carboxymethylsulfonylpyrimidinyl-4-, 2-Methylsulfonyl-6-methylpyrimidinyl-4, 2-Methylsulfonyl-6-ethylpyrimidinyl-4-, 2-Phenylsulfonyl-5-chlor-6-methylpyrimidinyl-, 2,6-Bis-methylsulfonylpyrimidinyl-4-, 2,6-Bis-methylsulfonyl-5-chlorpyrimidinyl-4-, 2,4-Bis-methylsulfonylpyrimidin-5-sulfonyl-, 2-Methylsulfonylpyrimidinyl-4, 2-Phenylsulfonylpyrimidinyl-4-, 2-Trichlormethylsulfonyl-6-methylpyrimidinyl-4-, 2-Methylsulfonyl-5-chlor-6-methylpyrimidinyl-4-, 2-Methylsulfonyl-5-brom-6-methylpyrimidinyl-4-, 2-Methylsulfonyl-5-chlor-6-ethylpyrimidinyl-4-, 2-Methylsulfonyl-5-chlor-6-chlormethylpyrimidinyl-4-, 2-Methylsulfonyl-4-chlor-6-methylpyrimidin-5-sulfonyl, 2-Methylsulfonyl-5-nitro-6-methylpyrimidinyl-4-, 2,5,6-Tris-methylsulfonylpyrimidinyl-4-, 2-Methylsulfonyl-5,6-dimethylpyrimidinyl-4-, 2-Ethylsulfonyl-5-chlor-6-methylpyrimidinyl-4-, 2-Methylsulfonyl-6-chlorpyrimidinyl-4-, 2,6-Bis-methylsulfonyl-5-chlorlpyrimidinyl-4-, 2-Methylsulfonyl-6-carbonylpyrimidinyl-4-, 2-Methylsulfonyl-5-sulfopyrimidinyl-4-, 2-Methylsulfonyl-6-carbomethoxypyrimidinyl-4-, 2-Methylsulfonyl-5-carboxypyrimidinyl-4-, 2-Methylsulfonyl-5-cyan-6-methoxypyrimidinyl-4-, 2-Methylsulfonyl-5-chlorpyrimidinyl-4-, 2-Sulfoethylsulfonyl-6-methylpyrimidinyl-4-, 2-Methylsulfonyl-5-brompyrimidinyl-4-, 2-Phenylsulfonyl-5-chlorpyrimidinyl-4-, 2-Carboxymethylsulfonyl-5-chlor-6-methylpyrimidinyl-4-, 2-Methylsulfonyl-6-chlorpyrimidin-4- und -5-carbonyl, 2,6-Bis(methylsulfonyl)-pyrimidin-4- oder -5-carbonyl-, 2-Ethylsulfonyl-6-chlorpyrimidin-5-carbonyl-, 2,4-Bis-(methylsulfonyl)-pyrimidin-5-sulfonyl-, 2-Methylsulfonyl-4-chlor-6-methylpyrimidin-5-sulfonyl- oder -carbonyl-, ammoniumgruppenhaltige Triazinringe, wie Trimethylammonium-4-phenylamino- oder -4-(o-, m- oder p-sulfophenyl)-aminotriazinyl-6-, 2-(1,1-Dimethylhydrazinium)-4-phenylamino- oder -4-(o-, m- oder p-sulfophenyl)-aminotriazinyl-6, 2-(2-Isopropyliden-1,1-dimethyl)-hydrazinium-4-phenylamino- oder -4-(o-, m- oder p-sulfophenyl)-amino-triazinyl-6-, 2-N-Aminopyrrolidinium- oder 2-Aminopiperidinium-4-phenylamino- oder -4-(o-, m- oder p-sulfophenyl)-aminotriazinyl-6-, 2-N-Aminopyrrolidinium- oder 2-N-Aminopiperidinium-4-phenylamino-oder -4-(o-, m- oder p-Sulfophenyl)-aminotriazinyl-6-, ferner 4-Phenylamino- oder -4-(sulfophenylamino)-triazinyl-6-Reste, die in 2-Stellung über eine Stickstoffbindung das 1,4-Bis-azabicyclo-[2,2,2]-octan oder das 1,2-Bis-aza-bicyclo-[0,3,3]-octan quartär gebunden enthalten, 2-Pyridinium-4-phenylamino- oder 4-(o-, m- oder p-Sulfophenyl)-aminotriazinyl-6- sowie entsprechende 2-Oniumtriazinyl-6-Reste, die in 4-Stellung durch Alkylamino-, wie Methylamino-, Ethylamino- oder β-Hydroxyethylamino- oder Alkoxy-, wie Methoxy- oder Alkoxy-, oder Aroxy-, wie Phenoxy- oder Sulfophenoxy-Gruppen substituiert sind: 2-Chlorbenzthiazol-5- oder -6-carbonyl- oder -5 - oder -6-sulfonyl-, 2-Arylsulfonyl- oder -Alkylsulfonylbenzthiazol-5- oder -6-carbonyl- oder -5- oder -6-sulfonyl-, wie 2-Methylsulfonyl- oder 2-Ethoxysulfonylbenzthiazol-5- oder 6-sulfonyl- oder -carbonyl-, 2-Phenylsulfonylbenzthiazol-5- oder -6-sulfonyl- oder carbonyl- und die entsprechenden im ankondensierten Benzolring Sulfogruppen enthaltenden 2-Sulfonylbenzthiazol-5- oder 6-carbonyl- oder -sulfonyl-Derivate, 2-Chlorbenzoxazol-5- oder -6-carbonyl- oder -sulfonyl-, 2-Chlorbenzimidazol-5- oder -6-carbonyl- oder sulfonyl-, 2-Chlor-1-methylbenzimidazol-5- oder 6-carbonyl- oder sulfonyl-, 2-Chlor-4-methylthiazol-(1,3)-5-carbonyl- oder -4- oder -5-sulfonyl-, N-Oxid des 4-Chlor- oder 4-Nitrochinolin-5-carbonyl oder auch die Reste 5-Chlor-2,6-difluor-1,3-dicyanphenyl, 2,4-Difluor-1,3,5-tricyanphenyl, 2,4,5-Trifluor-1,3-dicyanphenyl, 2,4-Dichlor-5-methylsulfonylpyrimidinyl-6, 2,4-Trichlor-5-Ethylsulfonylpyrimidinyl-6, 2-Fluor-5-methylsulfonyl-6'-(2'-sulfophenylamino)-pyrimidinyl -4, 2,5-Dichlor-6-methylsulfonylpyrimidinyl-4.

Eine Gruppe von geeigneten Reaktivgruppen umfasst solche der Formeln

-SO₂-Z (3a),

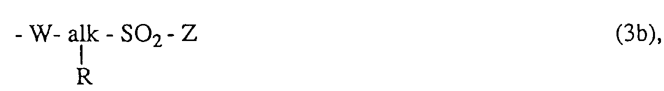

-W-alk-E-alk'-SO₂-Z (3c),

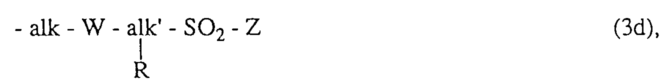

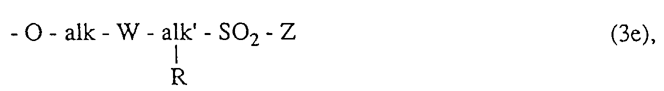

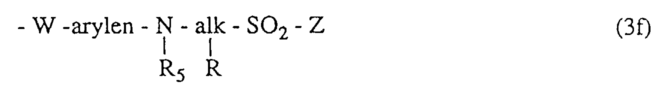

und 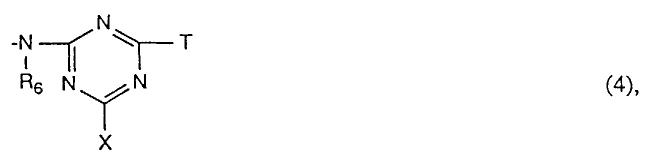 worin W eine Gruppe der Formel -SO₂-NR₅-, -CONR₅- oder -NR₅CO- ist, R₅ Wasserstoff, unsubstituiertes oder durch Hydroxy, Sulfo, Sulfato, Carboxy oder Cyano substituiertes C₁-C₄-Alkyl oder ein Rest der Formel 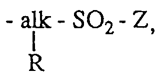 R Wasserstoff, Hydroxy, Sulfo, Sulfato, Carboxy, Cyano, Halogen, C₁-C₄-Alkoxycarbonyl, C₁-C₄-Alkanoyloxy, Carbamoyl oder die Gruppe -SO₂-Z ist, Z der Rest -CH=CH₂ oder -CH₂-CH₂-Y ist, Y eine Abgangsgruppe, E der Rest -O- oder -NR₇ ist, R₇ Wasserstoff oder C₁-C₄-Alkyl, alk und alk' unabhängig voneinander C₁-C₆-Alkylen, arylen einen unsubstituierten oder durch Sulfo, Carboxy, C₁-C₄-Alkyl, C₁-C₄-Alkoxy oder Halogen substituierten Phenylen- oder Naphthylenrest bedeutet, R₆ Wasserstoff oder unsubstituiertes oder durch Carboxy, Cyano, Hydroxy, Sulfo oder Sulfato substituiertes C₁-C₄-Alkyl und X eine als Anion abspaltbare Gruppe ist und T einen Rest der Formel 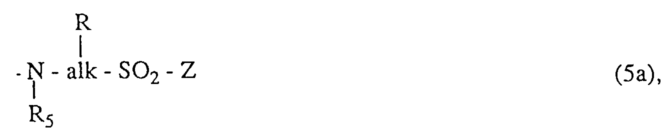 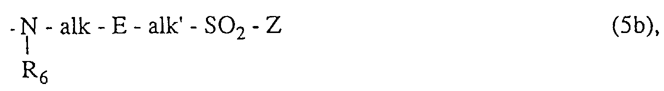 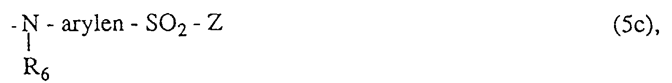 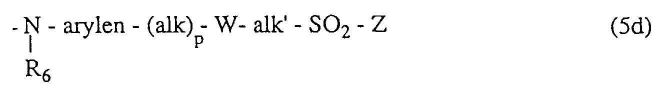 oder 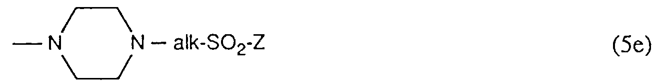 bedeutet, worin R, R₅, R₆, E, W, Z, alk, alk' und arylen die oben angegebenen Bedeutungen haben und p 0 oder 1 ist.

Geeignete Abgangsgruppen Y sind z.B. -Cl, -Br, -F, -OSO₃H, -SSO₃H, -OCO-CH₃, -OPO₃H₂, -OCO-CCl₃, -OCO-CHCl₂, -OCO-CH₂Cl, -OSO₂-C₁-C₄-Alkyl, -OSO₂-N(C₁-C₄-Alkyl)₂ oder -OCO-C₆H₅.

Bevorzugt ist Y eine Gruppe der Formel -Cl, -OSO₃H, -SSO₃H, -OCO-CH₃, -OCO-C₆H₅ oder -OPO₃H₂, insbesondere -OSO₃H.

Bei alk und alk' handelt es sich unabhängig voneinander z.B. um einen Methylen-, Äthylen-, 1,3-Propylen-, 1,4-Butylen-, 1,5-Pentylen- oder 1,6-Hexylenrest oder deren verzweigte Isomere.

Bevorzugt stehen alk und alk' für einen C₁-C₄-Alkylenrest und insbesondere bevorzugt für einen Äthylenrest.

R bedeutet bevorzugt Wasserstoff oder die Gruppe -SO₂-Z, worin Z die zuvor angegebenen Bedeutungen hat. Besonders bevorzugt steht R für Wasserstoff.

R₅ ist vorzugsweise Wasserstoff, C₁-C₄-Alkyl oder eine Gruppe -alk-SO₂-Z, worin alk und Z jeweils die zuvor angegebenen Bedeutungen haben. Besonders bevorzugt ist R₅ Wasserstoff oder C₁-C₄-Alkyl, insbesondere Wasserstoff.

R₆ ist vorzugsweise Wasserstoff oder ein C₁-C₄-Alkylrest und insbesondere bevorzugt Wasserstoff.

Arylen ist vorzugsweise ein 1,3- oder 1,4-Phenylenrest, der unsubstituiert oder z.B. durch Sulfo, Methyl, Methoxy oder Carboxy substituiert ist.

E steht vorzugsweise für -NH- und insbesondere bevorzugt für -O-.

W bedeutet bevorzugt eine Gruppe der Formel -CONH- oder -NHCO-.

X steht z.B. für Fluor, Chlor, Brom, Sulfo, C₁-C₄-Alkylsulfonyl oder Phenylsulfonyl und bevorzugt für Fluor oder Chlor.

Weitere interessante Reaktivgruppen sind solche der Formel (4), worin T eine als Anion abspaltbare Gruppe ist oder einen nicht-reaktiven Substituenten bedeutet.

Bedeutet T eine als Anion abspaltbare Gruppe, so handelt es sich hierbei z.B. um Fluor, Chlor, Brom, Sulfo, C₁-C₄-Alkylsulfonyl oder Phenylsulfonyl und bevorzugt um Fluor oder Chlor.

Steht T für einen nicht-reaktiven Substituenten, so kann dies z.B. ein Hydroxy-, C₁-C₄-Alkoxy-, C₁-C₄-Alkylthio-, Amino-, N-C₁-C₄-Alkylamino- oder N,N-Di-C₁-C₄-Alkylamino-, wobei das Alkyl gegebenenfalls z.B. durch Sulfo, Sulfato, Hydroxy, Carboxy oder Phenyl substituiert ist, Cyclohexylamino-, Morpholino-, oder N-C₁-C₄-Alkyl-N-phenylamino- oder Phenylamino- oder Naphthylaminorest, wobei das Phenyl oder Naphthyl gegebenenfalls z.B. durch C₁-C₄-Alkyl, C₁-C₄-Alkoxy, Carboxy, Sulfo oder Halogen substituiert ist, sein.

Beispiele für geeignete nicht-reaktive Substituenten T sind Amino, Methylamino, Äthylamino, β-Hydroxyäthylamino, N,N-Di-β-Hydroxyäthylamino, β-Sulfoäthylamino, Cyclohexylamino, Morpholino, o-, m- oder p-Chlorphenylamino, o-, m- oder p-Methylphenylamino, o-, m- oder p-Methoxyphenylamino, o-, m- oder p-Sulfophenylamino, Disulfophenylamino, o-Carboxyphenylamino, 1- oder 2-Naphthylamino, 1-Sulfo-2-naphthylamino, 4,8-Disulfo-2-naphthylamino, N-Äthyl-N-phenylamino, N-Methyl-N-phenylamino, Methoxy, Äthoxy, n- oder iso-Propoxy sowie Hydroxy.

Als nicht-reaktiver Substituent hat T vorzugsweise die Bedeutung Amino, N-C₁-C₄-Alkylamino, das im Alkylteil unsubstituiert oder durch Hydroxy, Sulfato oder Sulfo substituiert ist, Morpholino, Phenylamino oder N-C₁-C₄-Alkyl-N-phenylamino, worin das Phenyl jeweils unsubstituiert oder durch Sulfo, Carboxy, Methyl oder Methoxy substituiert ist. Besonders bevorzugt sind die Bedeutungen als Phenylamino oder N-C₁-C₄-Alkyl-N-phenylamino, worin das Phenyl jeweils unsubstituiert oder durch Sulfo, Carboxy, Methyl oder Methoxy substituiert ist.

Weitere interessante Reaktivgruppen sind Pyrimidin- oder Chinoxalinreste, welche jeweils über mindestens eine als Anion abspaltbare Gruppe verfügen. Beispiele sind der 2,3-Dichlorchinoxalin-6-carbonylaminorest, 2,4-Dichlorpyrimidin-5-carbonylaminorest sowie der Rest der Formel 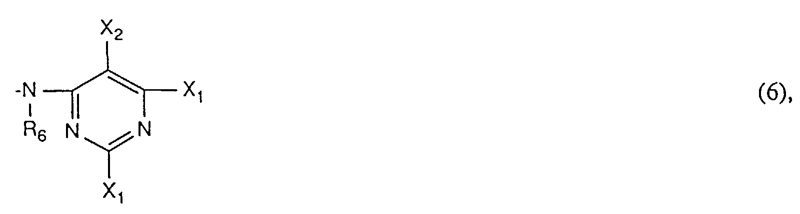 worin einer der Reste X₁ eine als Anion abspaltbare Gruppe ist und der andere Rest X₁ die für T als nicht-reaktiven Substituenten angegebenen Bedeutungen und Bevorzugungen hat oder ein Rest der Formeln (5a) bis (5e) oder eine als Anion abspaltbare Gruppe ist, X₂ ein negativer Substituent ist und R₆ unabhängig die unter Formel (4) angegebenen Bedeutungen hat.

Bei dem als Anion abspaltbaren Rest X₁ handelt es sich vorzugsweise um Fluor oder Chlor, Beispiele für geeignete Reste X₂ sind Nitro, Cyan, C₁-C₄-Alkylsulfonyl, Carboxy, Chlor, Hydroxy, C₁-C₄-Alkoxysulfonyl, C₁-C₄-Alkylsulfinyl, C₁-C₄-Alkoxycarbonyl oder C₂-C₄-Alkanoyl, wobei die Bedeutungen Chlor, Cyano und Methylsulfonyl für X₂ bevorzugt sind.

Besonders bevorzugte Reaktivgruppen sind solche der Formel (3a), wobei für Z die oben angegebenen Bedeutungen und Bevorzugungen gelten, insbesondere worin Z ein Vinyl- oder β-Sulfatoäthylrest ist, sowie solche der Formel (4), worin für T, X und R₆ die oben angegebenen Bedeutungen und Bevorzugungen gelten. Besonders bevorzugt ist T hierbei ein nicht-reaktiver Rest, insbesondere Phenylamino oder N-C₁-C₄-Alkyl-N-phenylamino, worin das Phenyl jeweils unsubstituiert oder durch Sulfo, Carboxy, Methyl oder Methoxy substituiert ist. X ist hierbei besonders bevorzugt Fluor oder Chlor. R₆ ist hierbei besonders bevorzugt Wasserstoff, Methyl oder Äthyl, insbesondere Wasserstoff. Ganz besonders bevorzugt als Reaktivgruppe ist der Rest der Formel (3a).

Der Substituent -NHR₁₂ in den Resten der Formeln (2d) und (2e) in der Bedeutung als gegebenenfalls weitersubstituierter Halogentriazinylaminorest ist vorzugsweise ein Rest der Formel (4), worin R₆ Wasserstoff bedeutet; für den Rest der Formel (4) gelten dabei die oben angegebenen Bevorzugungen.

Bei dem Rest Z' in den Resten der Formeln (2g) und (2h) handelt es sich bevorzugt um β-Sulfatoäthyl, β-Halogenäthyl oder Vinyl, insbesondere um β-Sulfatoäthyl oder Vinyl, vorzugsweise um β-Sulfatoäthyl.

Vorzugsweise enthalten die Reste A₁ und A₂ keine Reaktivgruppen.

Als Reste eines Disazofarbstoffes kommen insbesondere die folgenden in Betracht:

Farbstoffreste eines Disazofarbstoffes, der Formel

D₁-N=N-M-N=N-K- (7)

oder

-D₁-N=N-M-N=N-K (8).

Hierin ist D₁ ist der Rest einer Diazokomponente der Benzol- oder Naphthalinreihe, M der Rest einer Mittelkomponente der Benzol- oder Naphthalinreihe und K der Rest einer Kupplungskomponente der Benzol-, Naphthalin-, Pyrazolon-, 6-Hydroxypyridon-(2)- oder Acetessigsäurearylamid-Reihe, wobei D₁, M und K bei Azofarbstoffen übliche Substituenten, wie z.B. die oben angegebenen, tragen können. Insbesondere kommen als solche Substituenten gegebenenfalls durch Hydroxyl, Sulfo oder Sulfato weitersubstituiertes C₁-C₄-Alkyl oder C₁-C₄-Alkoxy, Halogen, Carboxy, Sulfo, Nitro, Cyan, Trifluormethyl, Sulfamoyl, Carbamoyl, Amino, Ureido, Hydroxy, Carboxy, Sulfomethyl, C₂-C₄-Alkanoylamino, gegebenenfalls im Phenylring durch C₁-C₄-Alkyl, C₁-C₄-Alkoxy, Halogen oder Sulfo substituiertes Benzoylamino, gegebenenfalls durch C₁-C₄-Alkyl, C₁-C₄-Alkoxy, Halogen, Carboxy oder Sulfo substituiertes Phenyl, sowie faserreaktive Reste in Betracht, wobei für die faserreaktiven Reste die oben angegebenen Bedeutungen und Bevorzugungen gelten.

Besonders bevorzugte Reste eines Disazofarbstoffes sind die folgenden: 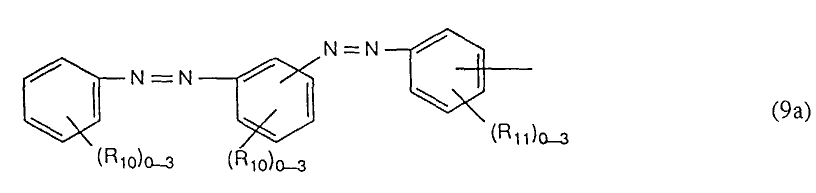 oder 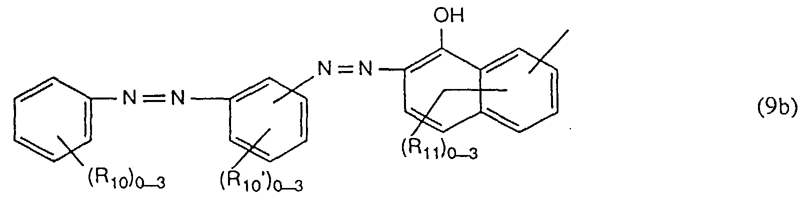 oder 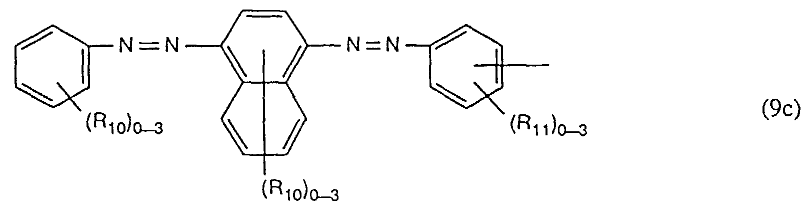 oder 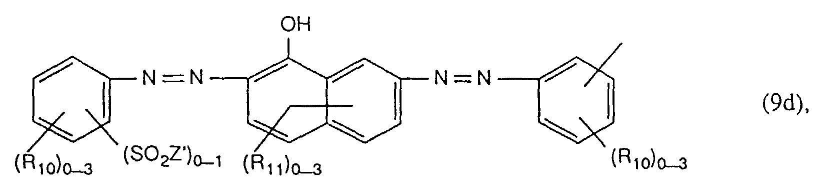 worin R₁₀ für 0 bis 3 gleiche oder verschiedene Substituenten aus der Gruppe C₁-C₄-Alkyl, C₁-C₄-Alkoxy, Halogen, Carboxy und Sulfo, R₁₀' die für R₁₀ angegebenen Bedeutungen hat und zusätzlich C₁-C₄-Hydroxyalkoxy oder C₁-C₄-Sulfatoalkoxy bedeuten kann, R₁₁ für 0 bis 3 gleiche oder verschiedene Substituenten aus der Gruppe Halogen, Nitro, Cyan, Trifluormethyl, Sulfamoyl, Carbamoyl, C₁-C₄-Alkyl, C₁-C₄-Alkoxy, Amino, Acetylamino, Ureido, Hydroxy, Carboxy, Sulfomethyl und Sulfo steht und Z' β-Sulfatoäthyl, β-Thiosulfatoäthyl, β-Phosphatoäthyl, β-Acyloxyäthyl, β-Halogenäthyl oder Vinyl ist.

Die Reste der Formeln (9a) bis (9d) können in den Phenyl- oder Naphthylringen noch als weiteren Substituenten einen Rest der Formel -SO₂Z' enthalten, worin Z' β-Sulfatoäthyl, β-Thiosulfatoäthyl, β-Phosphatoäthyl, β-Acyloxyäthyl, β-Halogenäthyl oder Vinyl ist. Z' ist bevorzugt β-Sulfatoäthyl oder Vinyl, insbesondere Vinyl.

Bei dem Rest eines Formazanfarbstoffes handelt es sich bevorzugt um solche der Formel 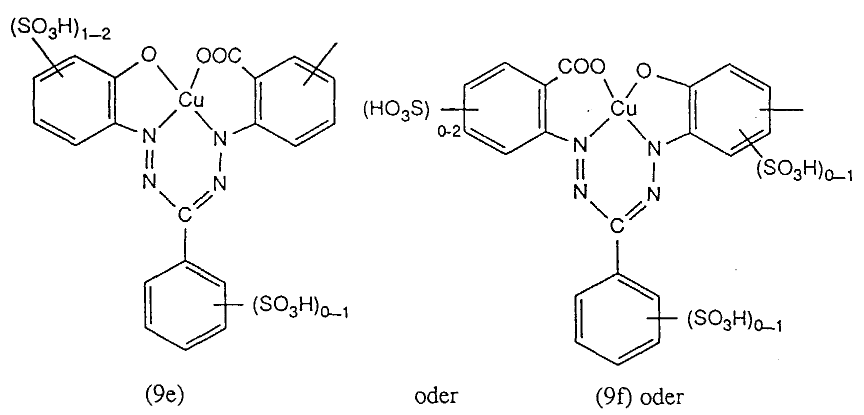 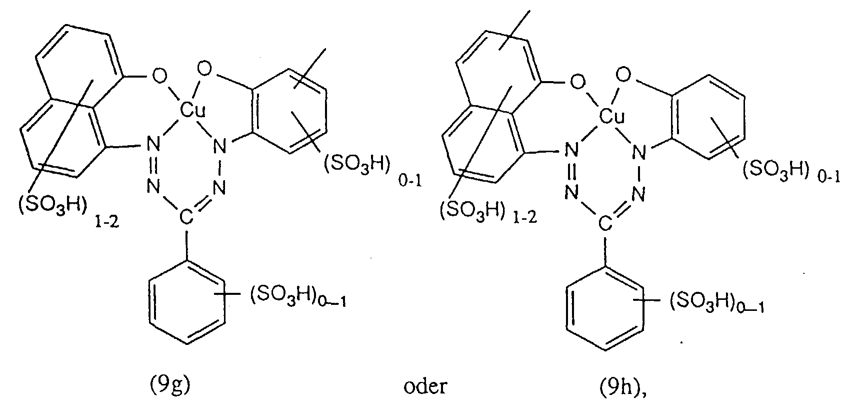 worin die Benzolkerne keine weiteren Substituenten enthalten oder durch C₁-C₄-Alkyl, C₁-C₄-Alkoxy, C₁-C₄-Alkylsulfonyl, Halogen oder Carboxy weitersubstituiert sind.

Bei dem Rest eines Anthrachinonfarbstoffes handelt es sich bevorzugt um einen Rest der Formel 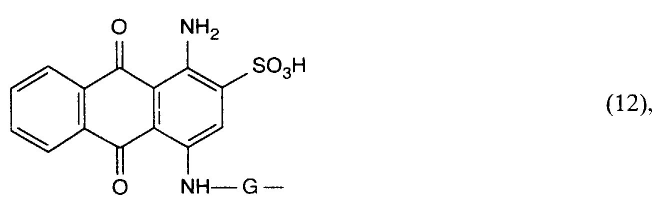 worin G ein Phenylen-, Cyclohexylen-, Phenylenmethylen- oder C₂-C₆-Alkylenrest ist, wobei der Anthrachinonkern durch eine weitere Sulfogruppe, und G als Phenylrest durch C₁-C₄-Alkyl, C₁-C₄-Alkoxy, Halogen, Carboxy oder Sulfo substituiert sein kann, und der Farbstoff vorzugsweise mindestens 2 Sulfogruppen enthält. Vorzugsweise ist G ein gegebenenfalls durch C₁-C₄-Alkyl, C₁-C₄-Alkoxy, Halogen, Carboxy oder Sulfo substituierter Phenylrest.

Bei dem Rest A₁ handelt es sich bevorzugt um einen Rest der Formeln (2a) bis (2f) oder (2h), (9a) bis (9h), oder (12), insbesondere um einen Rest der Formeln (9a) bis (9h), oder (12).

Ganz besonders bevorzugt sind A₁ und A₂ Reste eines Anthrachinon-, Formazan- oder Disazofarbstoffes oder Reste der Formeln (2a) bis (2f) oder (2h), wobei A₁ und A₂ voneinander verschiedene Bedeutungen haben. Insbesondere sind A₁ und A₂ voneinander verschiedene Reste der Formeln (2a) bis (2f) oder (2h), (9a) bis (9h), oder (12).

Besonders wichtige Reaktivfarbstoffe der Formel (1) sind solche, worin A₁ ein Rest der Formeln (9a) bis (9h), oder (12) ist und A₂ ein Rest der Formeln (2a) bis (2h), (9a) bis (9h), oder (12) ist.

Für die Reste Y₁, Y₂, R₁, R₂, R₃, R₄ und B der Reaktivfarbstoffe der Formel (1) gelten hierbei die oben angegebenen Bedeutungen und Bevorzugungen.

Ganz besonders wichtig sind Reaktivfarbstoffe der Formel (1), worin Y₁ und Y₂ unabhängig voneinander Fluor oder Chlor bedeuten, R₁, R₂, R₃ und R₄ unabhängig voneinander Wasserstoff, Methyl oder Aethyl, insbesondere Wasserstoff, sind, B ein C₂-C₁₂-Alkylenrest ist, welcher durch 1, 2 oder 3 Reste -O- unterbrochen sein kann, und für A₁ und A₂ die oben angegebenen Bedeutungen und Bevorzugungen gelten.

Gegenstand der vorliegenden Erfindung ist ferner ein Verfahren zur Herstellung von Reaktivfarbstoffen der Formel (1), welches dadurch gekennzeichnet ist, dass man Reste der Formeln

A₁-N(R₁)H (13a)

und

A₂-N(R₄)H (13b)

oder entsprechende Farbstoffvorprodukte, mindestens eine Halogentriazinverbindung und ein Diamin der Formel 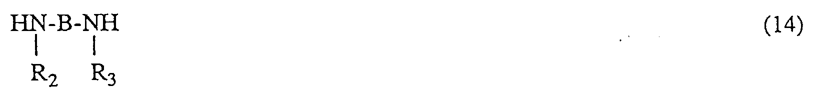 in beliebiger Reihenfolge miteinander umsetzt, wobei A₁, A₂, R₁, R₂, R₃, R₄ und B die unter Formel (1) angegebenen Bedeutungen haben, oder, im Falle der Verwendung von Farbstoffvorprodukten, die erhaltenen Zwischenprodukte in die gewünschten Farbstoffe überführt und gegebenenfalls eine weitere Umwandlungsreaktion anschliesst.

Bei der Herstellung der Endfarbstoffe aus Vorprodukten handelt es sich vor allem um Kupplungen, die zu Azofarbstoffen führen.

Da die einzelnen oben angegebenen Verfahrensschritte in unterschiedlicher Reihenfolge, gegebenenfalls teilweise auch gleichzeitig, ausgeführt werden können, sind verschiedene Verfahrensvarianten möglich. Im allgemeinen führt man die Umsetzung schrittweise nacheinander aus, wobei die Reihenfolge der einfachen Reaktionen zwischen den einzelnen Reaktionskomponenten vorteilhafterweise sich nach den besonderen Bedingungen richtet.

Eine Verfahrensvariante besteht darin, dass man einen der Reste der Formeln (13a) und (13b) mit einer Halogentriazinverbindung kondensiert, das erhaltene Produkt mit einem Diamin der Formel (14) kondensiert und das erhaltene Reaktionsprodukt mit dem anderen Rest der Formeln (13b) und (13a), welcher zuvor mit einer Halogentriazinverbindung kondensiert wurde, umsetzt.

Als Halogentriazinverbindungen verwendet man vorzugsweise Cyanurhalogenide, wie z.B. Cyanurchlorid oder Cyanurfluorid. Die Einführung einer Carboxypyridiniumverbindung erfolgt in der Regel im Anschluss an eine Kondensationsreaktion der entsprechenden Cyanurhalogenide.

Die Verbindungen der Formeln (13a), (13b), (14) sowie die Halogentriazinverbindungen sind bekannt oder können in Analogie zu bekannten Verbindungen erhalten werden.

Die einzelnen Kondensationsreaktionen erfolgen z.B. gemäss an sich bekannter Verfahren, in der Regel in wässriger Lösung, bei einer Temperatur von beispielsweise 0 bis 50°C und einem pH-Wert von z.B. 4 bis 9.

Die erfindungsgemässen Farbstoffe der Formel (1) welche eine Sulfo- oder Sulfatogruppe enthalten liegen entweder in der Form ihrer freien Säure oder vorzugsweise als deren Salze vor. Als Salze kommen beispielsweise die Alkali-, Erdalkali- oder Ammoniumsalze oder die Salze eines organischen Amins in Betracht. Als Beispiele seien die Natrium-, Lithium-, Kalium- oder Ammoniumsalze oder das Salz des Mono-, Di- oder Triäthanolamins genannt.

Die erfindungsgemässen Farbstoffe eignen sich zum Färben und Bedrucken der verschiedensten Materialien, wie hydroxylgruppenhaltigen oder stickstoffhaltigen Fasermaterialien. Als Beispiele seien Seide, Leder, Wolle, Polyamidfasern und Polyurethane, und insbesondere cellulosehaltige Fasermaterialien aller Art genannt. Solche cellulosehaltige Fasermaterialien sind beispielsweise die natürlichen Cellulosefasern, wie Baumwolle, Leinen und Hanf, sowie Zellstoff und regenerierte Cellulose. Die erfindungsgemässen Farbstoffe sind auch zum Färben oder Bedrucken von hydroxylgruppenhaltigen Fasern geeignet, die in Mischgeweben enthalten sind, z.B. von Gemischen aus Baumwolle mit Polyesterfasern oder Polyamidfasern. Besonders geeignet sind die erfindungsgemässen Farbstoffe zum Färben oder Bedrucken von cellulosehaltigen Fasermaterialien. Weiterhin können sie zum Färben oder Bedrucken von natürlichen oder synthetischen Polyamidfasermaterialien verwendet werden.

Die erfindungsgemässen Farbstoffe lassen sich auf verschiedene Weise auf das Fasermaterial applizieren und auf der Faser fixieren, insbesondere in Form von wässrigen Farbstofflösungen und -druckpasten. Sie eignen sich sowohl für das Ausziehverfahren als auch zum Färben nach dem Foulard-Färbeverfahren, wonach die Ware mit wässrigen, gegebenenfalls salzhaltigen Farbstofflösungen imprägniert wird, und die Farbstoffe nach einer Alkalibehandlung oder in Gegenwart von Alkali, gegebenenfalls unter Wärmeeinwirkung, fixiert werden. Besonders geeignet sind sie für das sogenannte Kaltverweilverfahren, wonach der Farbstoff zusammen mit dem Alkali auf dem Foulard aufgebracht wird und danach durch mehrstündiges Lagern bei Raumtemperatur fixiert wird. Nach dem Fixieren werden die Färbungen oder Drucke mit kaltem und heissem Wasser, gegebenenfalls unter Zusatz eines dispergierend wirkenden und die Diffusion der nicht fixierten Anteile fördernden Mittels gründlich gespült.

Die erfindungsgemässen Farbstoffe zeichnen sich durch hohe Reaktivität, gutes Fixiervermögen und ein sehr gutes Aufbauvermögen aus. Sie können daher nach dem Ausziehfärbeverfahren bei niedrigen Färbetemperaturen eingesetzt werden und erfordern beim Pad-Steam-Verfahren nur kurze Dämpfzeiten. Die Fixiergrade sind hoch und die nicht fixierten Anteile können leicht ausgewaschen werden, wobei die Differenz zwischen Ausziehgrad und Fixiergrad bemerkenswert klein, d.h. der Seifverlust sehr gering ist. Die erfindungsgemässen Farbstoffe eignen sich auch besonders zum Druck, vor allem auf Baumwolle, ebenso aber auch zum Bedrucken von stickstoffhaltigen Fasern, z.B. von Wolle oder Seide oder von Mischgeweben, die Wolle oder Seide enthalten.

Die mit den erfindungsgemässen Farbstoffen hergestellten Färbungen und Drucke besitzen eine hohe Farbstärke und eine hohe Faser-Farbstoff-Bindungsstabilität, sowohl in saurem als auch in alkalischem Bereich, weiterhin eine gute Lichtechtheit und sehr gute Nassechtheitseigenschaften, wie Wasch-, Wasser-, Seewasser-, Ueberfärbe- und Schweissechtheiten, sowie eine gute Plissierechtheit, Bügelechtheit und Reibechtheit.

Die nachfolgenden Beispiele dienen zur Erläuterung der Erfindung. Die Temperaturen sind in Celsiusgraden angegeben, Teile sind Gewichtsteile, die Prozentangaben beziehen sich auf Gewichtsprozente, sofern nicht anders vermerkt. Gewichtsteile stehen zu Volumenteilen im Verhältnis von Kilogramm zu Liter.

Beispiel 1: Zu einer neutralen Lösung von 53 Teilen 1-Amino-4-(3-amino-2,4,6-trimethyl-5-sulfophenyl)-anthrachinon-2-sulfonsäure und 5 Teilen Dinatriumhydrogenphosphat in 500 Teilen Wasser werden bei einer Temperatur unterhalb von 2°C 14 Teile Cyanurfluorid getropft; dabei wird der pH-Wert durch Zugabe von Natriumhydroxidlösung konstant gehalten. Nach beendeter Reaktion tropft man 6 Teile Ethylendiamin in 54 Teilen Wasser derart zu, dass die Temperatur 5°C nicht übersteigt und der pH bei einem Wert von 6 bleibt. Anschliessend wird der pH bei einem Wert von 6 gehalten.
Man erhält eine Lösung von 1-Amino-4-{3-[4-(2-aminoethylamino)-6-fluor-[1,3,5]-triazin-2-ylamino]-2,4,6-trimethyl-5-sulfophenyl)}-anthrachinon-2-sulfonsäure (Lösung 1).

Zu einer neutralen Lösung von 60 Teilen des Kupfer-Komplexes von 5-Amino-3-[3-phenyl-5-(2-carboxy-5-sulfophenyl)-1-formazano]-4-hydroxybenzolsulfonsäure und 5 Teilen Dinatriumhydrogenphosphat in 500 Teilen Wasser werden bei einer Temperatur unterhalb von 2°C 14 Teile Cyanurfluorid getropft; dabei wird der pH-Wert durch Zugabe von Natriumhydroxidlösung konstant gehalten.
Man erhält eine Lösung von 5-[4,6-Difluor-[1,3,5]-triazin-2-ylamino]-3-[3-phenyl-5-(2-carboxy-5-sulfophenyl)-1-formazano]-4-hydroxybenzolsulfonsäure (Lösung 2).

Zu Lösung 1 wird Lösung 2 gegeben, der pH auf einen Wert von 8,5 erhöht und gehalten.
Man lässt auf Raumtemperatur erwärmen, befreit die Lösung dialytisch von Salz und dampft den Farbstoff ein. Man erhält einen Farbstoff, der in Form der freien Säure der Verbindung der Formel 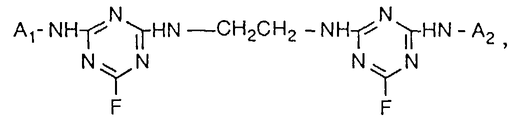 worin A₁ ein Rest der Formel 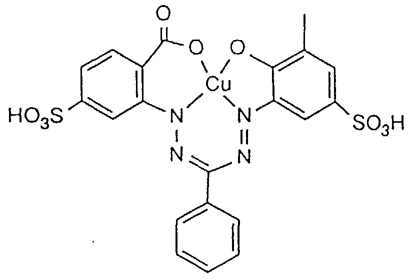 und A₂ ein Rest der Formel 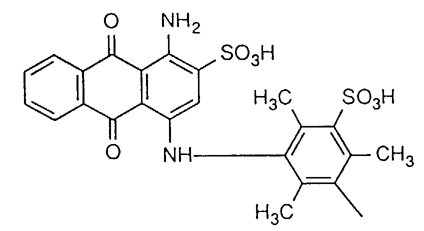 ist, entspricht. Der erhaltene Farbstoff färbt Baumwolle in brillanten blauen Farbtönen.

Beispiel 2: In 50 Teilen Wasser werden unter Zugabe eines Netzmittels und 5 Teilen Dinatriumhydrogenphosphat bei einer Temperatur von 0°C 19 Teile Cyanurchlorid kräftig verrührt. Dazu tropft man eine neutrale Lösung von 53 Teilen 1-Amino-4-(3-amino-2,4,6-trimethyl-5-sulfophenyl)-anthrachinon-2-sulfonsäure in 450 Teilen Wasser; dabei wird der pH durch Zugabe von Natronlauge bei einem Wert von 4,5 gehalten. Nach beendeter Reaktion tropft man 6 Teile Ethylendiamin in 54 Teilen Wasser derart zu, dass die Temperatur unterhalb von 15°C und der pH bei einem Wert von 7 bleibt. Anschliessend wird der pH auf einen Wert von 8,5 erhöht und gehalten. Zum vollständigen Umsatz wird gegen Ende der Reaktion auf eine Temperatur von 40°C erwärmt.
Man erhält eine Lösung von 1-Amino-4-{3-[(2-aminoethylamino)-6-chlor-[1,3,5]-triazin-2-ylamino]-2,4,6-trimethyl-5-sulfophenyl}-anthrachinon-2-sulfonsäure (Lösung 1).

In 50 Teilen Wasser werden unter Zugabe eines Netzmittels und 5 Teilen Dinatriumhydrogenphosphat bei einer Temperatur von 0°C 19 Teile Cyanurchlorid kräftig verrührt. Dazu tropft man eine neutrale Lösung von 48 Teilen 2-(2-Acetylamino-4-aminophenylazo)-naphthalin-1,5-disulfonsäure in 450 Teilen Wasser, dabei wird der pH durch Zugabe von Natronlauge bei einem Wert von 4,5 gehalten.
Man erhält eine Lösung von 2-[2-Acetylamino-4-(4,6-dichlor-[1,3,5]-triazin-2-ylamino)-phenylazo]-naphthalin-1,5-disulfonsäure. (Lösung 2).

Zu Lösung 1 wird Lösung 2 gegeben, der pH auf einen Wert von 8,5 erhöht und gehalten. Zum vollständigen Umsatz wird gegen Ende der Reaktion auf eine Temperatur von 40°C erwärmt. Man befreit die Lösung dialytisch von Salz und dampft den Farbstoff ein. Man erhält einen Farbstoff, der in Form der freien Säure der Verbindung der Formel 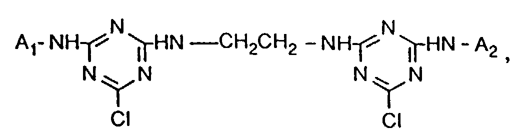 worin A₁ ein Rest der Formel 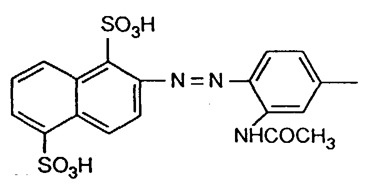 und A₂ ein Rest der Formel 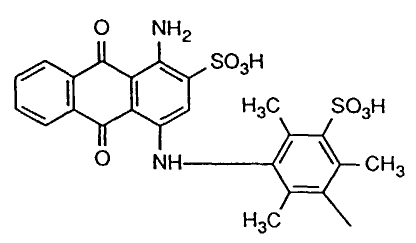 ist, entspricht. Der erhaltene Farbstoff färbt Baumwolle in brillanten grünen Farbtönen.

Beispiele 3 bis 168: In analoger Weise zu den Angaben in Beispiel 1 können Farbstoffe der Formel 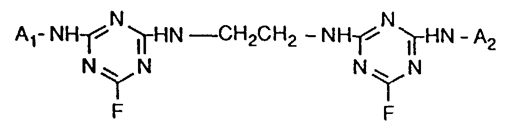 erhalten werden, worin A₁ und A₂ die in der folgenden Tabelle 1 in den Spalten 2 und 3 angegebenen Bedeutungen haben. Die Farbstoffe färben Baumwolle in den in Tabelle 1 in Spalte 4 angegebenen Farbtönen. Die Reste A₁ und A₂ sind mit den Buchstaben A bis Z5 bezeichnet, welche folgende Bedeutungen haben:

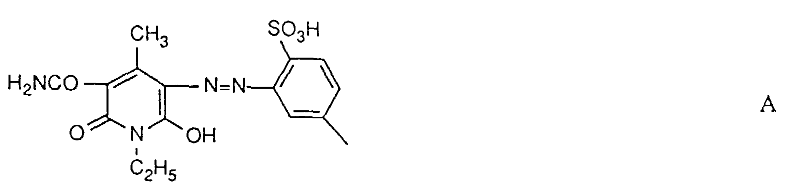

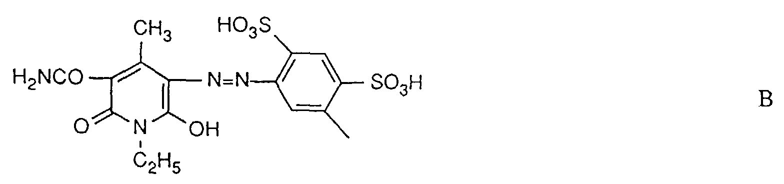

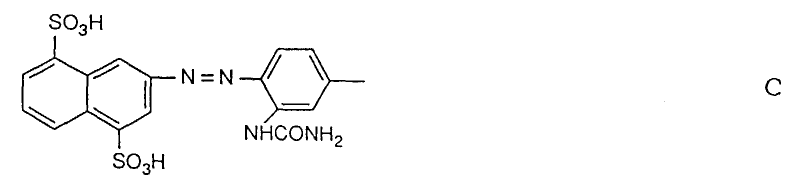

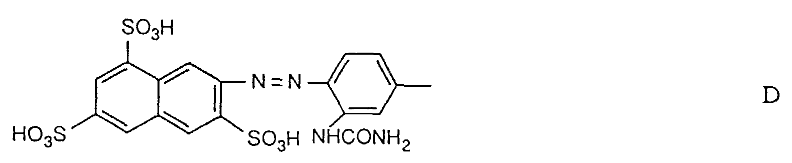

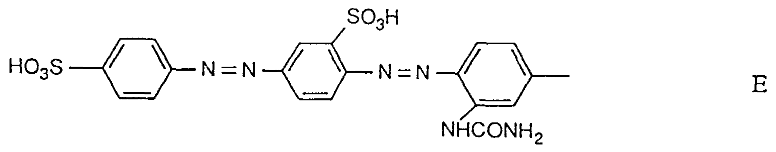

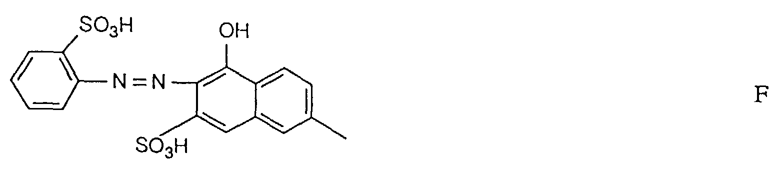

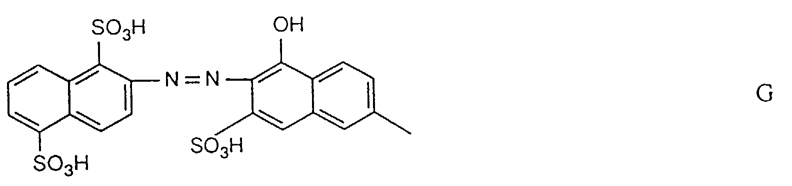

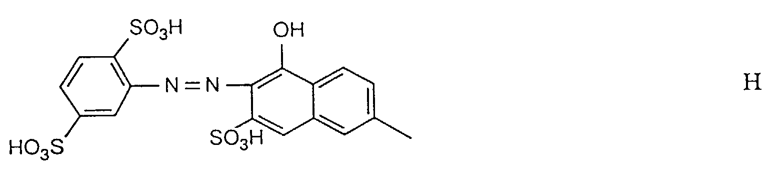

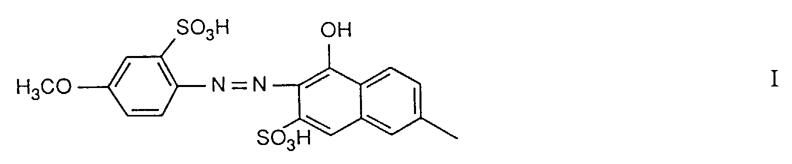

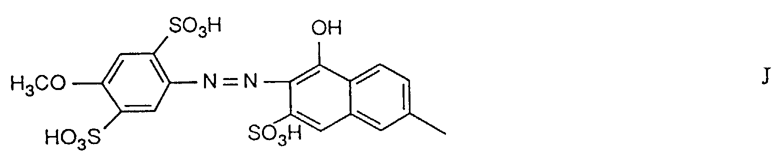

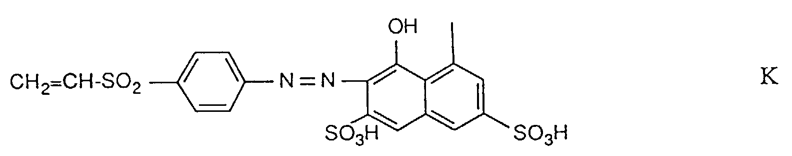

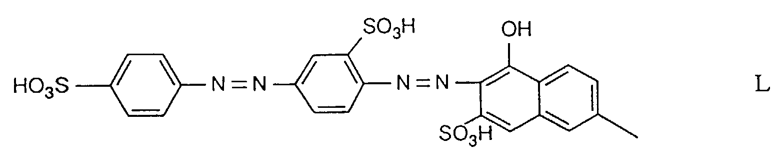

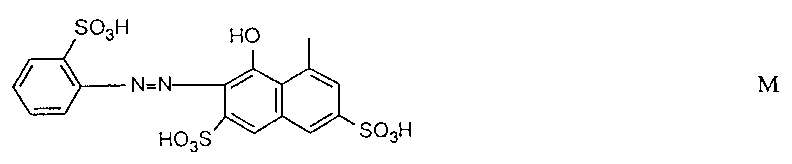

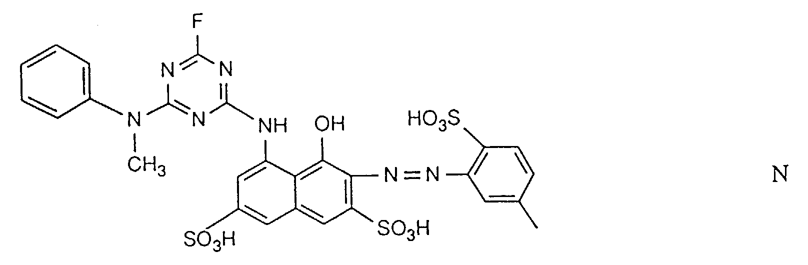

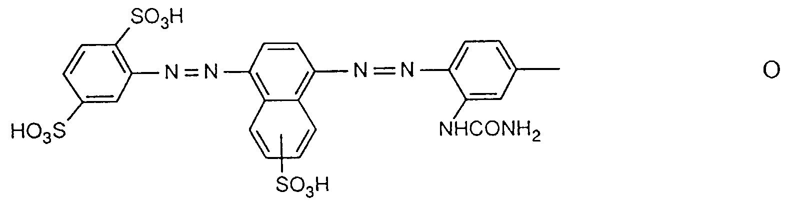

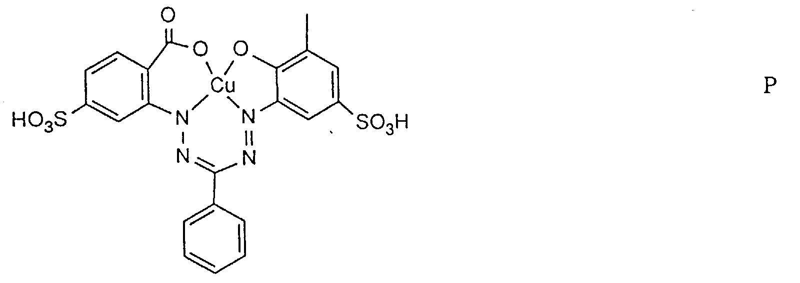

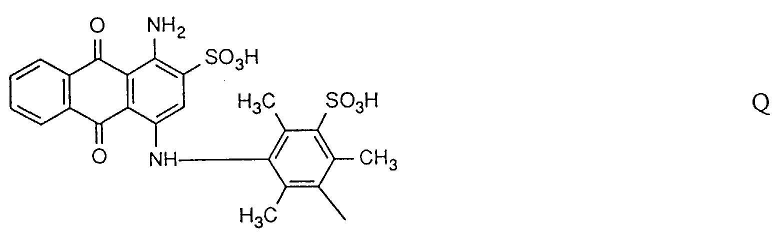

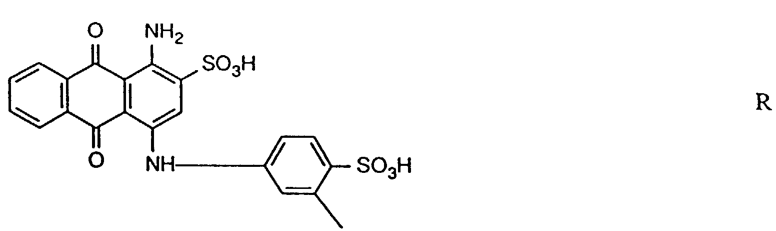

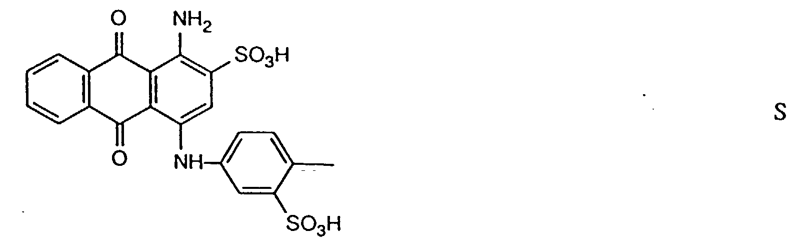

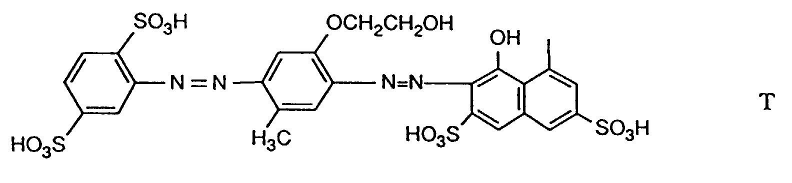

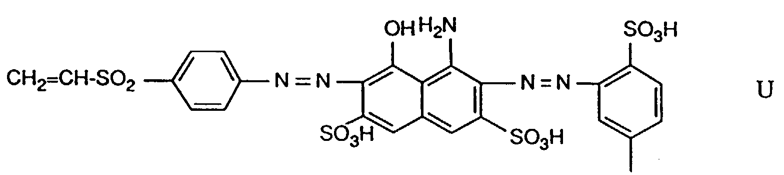

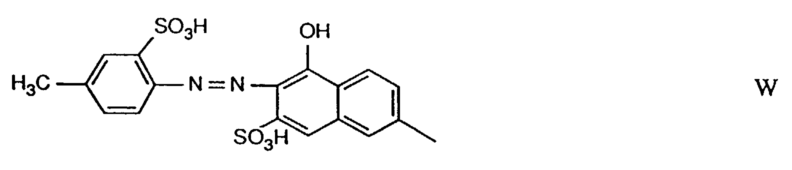

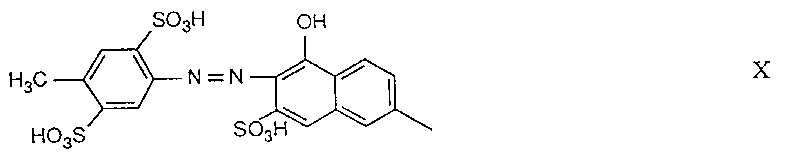

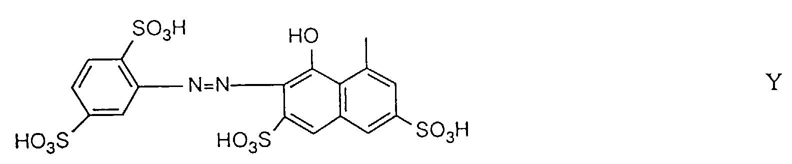

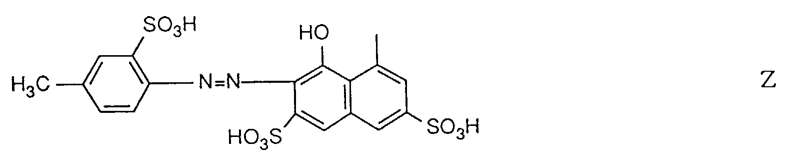

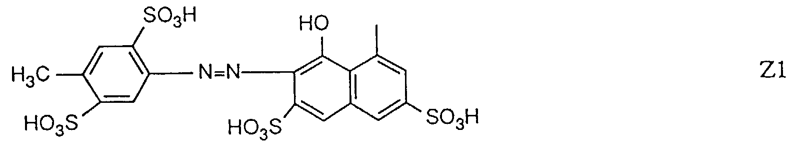

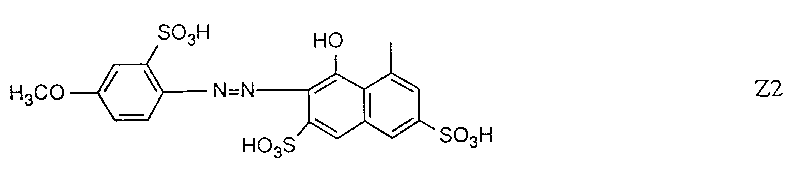

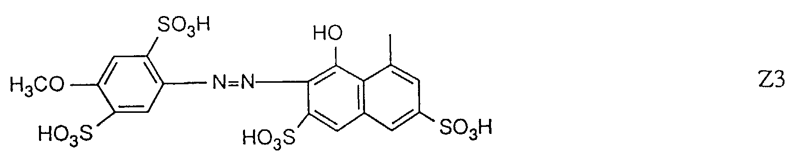

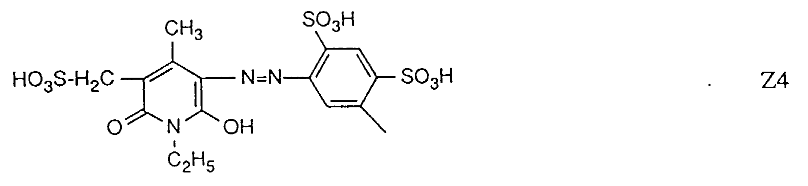

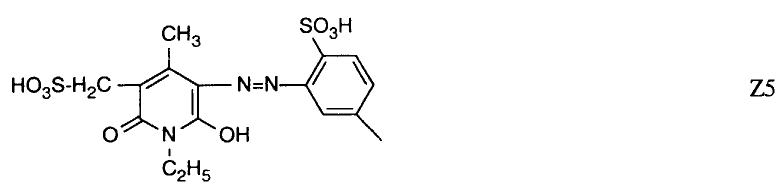

**Tabelle 1**

| Bsp. | A₁ | A₂ | Farbton auf Baumwolle |
|---|---|---|---|
| 3 | A | P | grün |
| 4 | A | Q | grün |
| 5 | A | R | grün |
| 6 | A | S | grün |
| 7 | A | T | grün |
| 8 | A | U | grün |
| 9 | B | P | grün |
| 10 | B | Q | grün |
| 11 | B | R | grün |
| 12 | B | S | grün |
| 13 | B | T | grün |
| 14 | B | U | grün |
| 15 | C | L | rotstichig orange |
| 16 | C | P | oliv |
| 17 | C | Q | oliv |
| 18 | C | R | oliv |
| 19 | C | S | oliv |
| 20 | D | P | oliv |
| 21 | D | Q | oliv |
| 22 | D | R | oliv |
| 23 | D | S | oliv |
| 24 | E | L | scharlach |
| 25 | E | O | braun |
| 26 | E | T | oliv |
| 27 | E | U | oliv |
| 28 | F | G | orange |
| 29 | F | H | orange |
| 30 | F | I | rotstichig orange |
| 31 | F | J | rotstichig orange |
| 32 | F | L | scharlach |
| 33 | F | M | scharlach |
| 34 | F | N | scharlach |
| 35 | G | H | scharlach |
| 36 | G | I | rotorange |
| 37 | G | J | rotorange |
| 38 | G | L | scharlach |
| 39 | G | M | scharlach |
| 40 | G | N | scharlach |
| 41 | H | I | rotorange |
| 42 | H | J | rotorange |
| 43 | H | L | scharlach |
| 44 | H | M | scharlach |
| 45 | H | N | scharlach |
| 46 | I | J | scharlach |
| 47 | I | L | rot |
| 48 | I | M | rot |
| 49 | I | N | rot |
| 50 | J | L | rot |
| 51 | J | M | rot |
| 52 | J | N | rot |
| 53 | K | L | rot |
| 54 | K | N | rot |
| 55 | K | P | violett |
| 56 | K | S | violett |
| 57 | K | U | bordeaux |
| 58 | L | M | rot |
| 59 | L | N | rot |
| 60 | L | P | violett |
| 61 | L | S | violett |
| 62 | L | U | violett |
| 63 | M | N | rot |
| 64 | M | P | violett |
| 65 | M | S | violett |
| 66 | M | U | violett |
| 67 | N | P | violett |
| 68 | N | S | violett |
| 69 | N | U | violett |
| 70 | P | Q | blau |
| 71 | P | R | blau |
| 72 | P | S | blau |
| 73 | P | T | blau |
| 74 | P | U | blau |
| 75 | Q | R | blau |
| 76 | Q | S | blau |
| 77 | Q | T | blau |
| 78 | Q | U | blau |
| 79 | R | S | blau |
| 80 | R | T | blau |
| 81 | R | U | blau |
| 82 | S | T | blau |
| 83 | S | U | blau |
| 84 | T | U | marineblau |
| 85 | W | M | gelbstichig rot |
| 86 | W | Y | rotbraun |
| 87 | W | Z | gelbstichig rot |
| 88 | W | Z1 | gelbstichig rot |
| 89 | W | Z2 | rot |
| 90 | W | Z3 | rot |
| 91 | W | L | rot |
| 92 | W | J | rot |
| 93 | W | I | rot |
| 94 | W | G | scharlach |
| 95 | W | F | orange |
| 96 | X | M | gelbstichig rot |
| 97 | X | Y | scharlach |
| 98 | X | Z | gelbstichig rot |
| 99 | X | Z1 | gelbstichig rot |
| 100 | X | Z2 | rot |
| 101 | X | Z3 | rot |
| 102 | X | L | rot |
| 103 | X | J | scharlach |
| 104 | X | I | scharlach |
| 105 | X | F | scharlach |
| 106 | X | G | scharlach |
| 107 | Y | F | gelbstichig rot |
| 108 | Y | G | gelbstichig rot |
| 109 | Y | H | gelbstichig rot |
| 110 | Y | I | rot |
| 111 | Y | J | rot |
| 112 | Y | L | rot |
| 113 | Y | N | rot |
| 114 | Y | P | violett |
| 115 | Y | S | violett |
| 116 | Y | U | violett |
| 117 | Z | F | gelbstichig rot |
| 118 | Z | G | gelbstichig rot |
| 119 | Z | H | gelbstichig rot |
| 120 | Z | I | rot |
| 121 | Z | J | rot |
| 122 | Z | L | rot |
| 123 | Z | N | rot |
| 124 | Z | P | violett |
| 125 | Z | S | violett |
| 126 | Z | U | violett |
| 127 | Z1 | F | gelbstichig rot |
| 128 | Z1 | G | gelbstichig rot |
| 129 | Z1 | H | gelbstichig rot |
| 130 | Z1 | I | rot |
| 131 | Z1 | J | rot |
| 132 | Z1 | L | rot |
| 133 | Z1 | N | rot |
| 134 | Z1 | P | violett |
| 135 | Z1 | S | violett |
| 136 | Z1 | U | violett |
| 137 | Z2 | F | rot |
| 138 | Z2 | G | rot |
| 139 | Z2 | H | rot |
| 140 | Z2 | I | rot |
| 141 | Z2 | J | rot |
| 142 | Z2 | L | rot |
| 143 | Z2 | N | blaustichig rot |
| 144 | Z2 | P | violett |
| 145 | Z2 | S | violett |
| 146 | Z2 | U | violett |
| 147 | Z3 | F | rot |
| 148 | Z3 | G | rot |
| 149 | Z3 | H | rot |
| 150 | Z3 | I | rot |
| 151 | Z3 | J | rot |
| 152 | Z3 | L | rot |
| 153 | Z3 | N | blaustichig rot |
| 154 | Z3 | P | violett |
| 155 | Z3 | S | violett |
| 156 | Z3 | U | violett |
| 157 | Z4 | P | grün |
| 158 | Z4 | Q | grün |
| 159 | Z4 | R | grün |
| 160 | Z4 | S | grün |
| 161 | Z4 | T | grün |
| 162 | Z4 | U | grün |
| 163 | Z5 | P | grün |
| 164 | Z5 | Q | grün |
| 165 | Z5 | R | grün |
| 166 | Z5 | S | grün |
| 167 | Z5 | T | grün |
| 168 | Z5 | U | grün |

Beispiele 169 bis 336: In analoger Weise zu den Angaben in Beispiel 2 können Farbstoffe der Formel 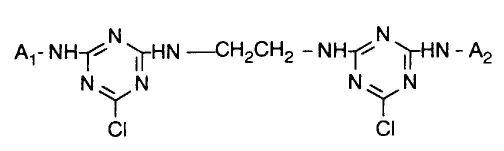 erhalten werden, worin A₁ und A₂ die in Beispiel 1 oder in den Beispielen 3 bis 168 der vorstehenden Tabelle 1 in den Spalten 2 und 3 angegebenen Bedeutungen haben. Die Farbstoffe färben Baumwolle in den in Beispiel 1 bzw. in Tabelle 1 in Spalte 4 angegebenen Farbtönen.

Verfährt man wie in den Beispielen 1 bis 336 angegeben, verwendet jedoch anstelle von Ethylendiamin ein Diamin der Formel

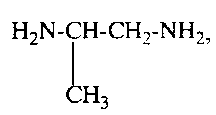

H₂N-(CH₂)₃-NH₂,

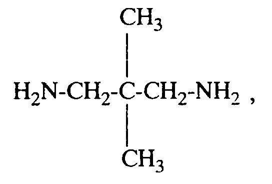

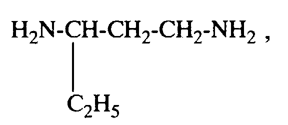

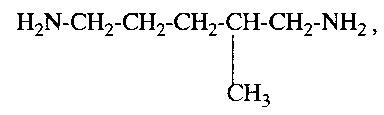

H₂N-(CH₂)₇-NH₂,

H₂N-(CH₂)₃-O-(CH₂)₄-O-(CH₂)₃-NH₂,

NH₂-(CH₂)₂-O-(CH₂)₂-O-(CH₂)₂-NH₂,

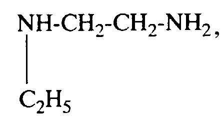

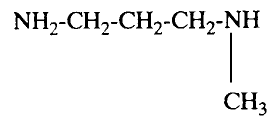

oder 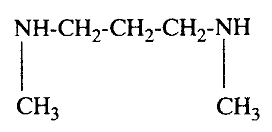 so erhält man analoge Farbstoffe mit entsprechenden Alkylenbrückengliedern.

### Färbevorschrift

2 Teile des gemäss Beispiel 1 erhaltenen Reaktivfarbstoffes werden in 400 Teilen Wasser gelöst; dazu gibt man 1500 Teile einer Lösung, die pro Liter 53 g Natriumchlorid enthält. In dieses Färbebad geht man bei 40°C mit 100 Teilen Baumwollgewebe ein. Nach 45 Minuten werden 100 Teile einer Lösung, die pro Liter 16 g Natriumhydroxyd und 20 g kalziniertes Soda enthält, zugegeben. Die Temperatur des Färbebades wird weitere 45 Minuten bei 40°C gehalten. Danach wird die gefärbte Ware gespült, während einer Viertelstunde mit einem nichtionogenen Waschmittel kochend geseift, nochmals gespült und getrocknet.

### Druckvorschrift

3 Teile der gemäss Beispiel 2 erhaltenen Reaktivfarbstoffes werden unter schnellem Rühren in 100 Teile einer Stammverdickung, enthaltend 50 Teile 5%ige Natriumalginatverdickung, 27,8 Teile Wasser, 20 Teile Harnstoff, 1 Teil m-nitrobenzolsulfonsaures Natrium sowie 1,2 Teile Natriumhydrogencarbonat, eingestreut. Mit der so erhaltenen Druckpaste bedruckt man ein Baumwollgewebe, trocknet und dämpft den erhaltenen bedruckten Stoff 2 Minuten bei 102°C in gesättigtem Dampf. Das bedruckte Gewebe wird dann gespült, gegebenenfalls kochend geseift und nochmals gespült, und anschliessend getrocknet.

## Patentansprüche

1. Reaktivfarbstoffe der Formel 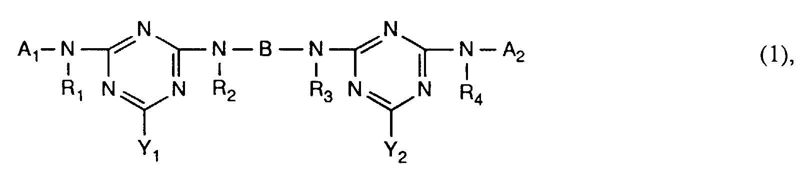 worin
R₁, R₂, R₃ und R₄ unabhängig voneinander Wasserstoff oder gegebenenfalls substituiertes C₁-C₄-Alkyl sind,
B ein aliphatisches Brückenglied ist,
Y₁ und Y₂ unabhängig voneinander Halogen oder Carboxypyridinium bedeuten,
A₁ den Rest eines Anthrachinon-, Phthalocyanin-, Dioxazin-, Formazan- oder Disazofarbstoffes, oder einen Rest der Formel 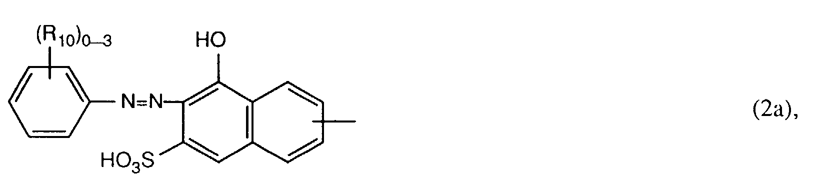 worin R₁₀ für 0 bis 3 gleiche oder verschiedene Substituenten aus der Gruppe C₁-C₄-Alkyl, C₁-C₄-Alkoxy, Halogen, Carboxy und Sulfo steht, 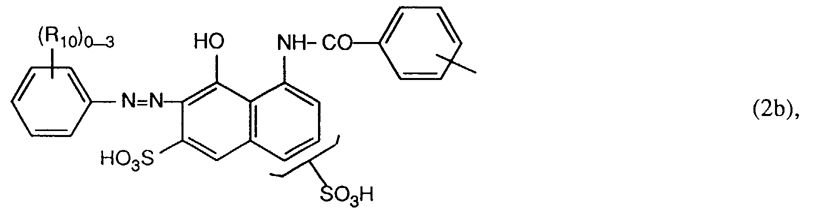 worin R₁₀ für 0 bis 3 gleiche oder verschiedene Substituenten aus der Gruppe C₁-C₄-Alkyl, C₁-C₄-Alkoxy, Halogen, Carboxy und Sulfo steht, 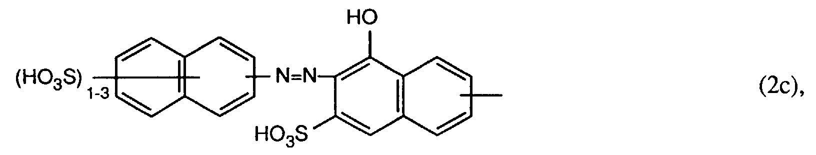 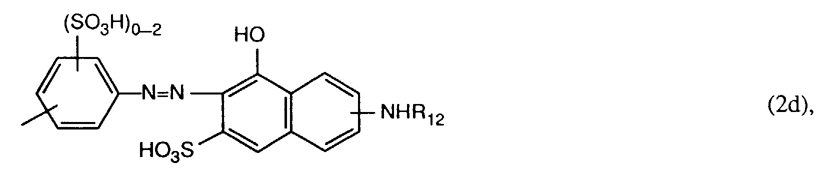 worin R₁₂ C₁-C₄-Alkanoyl, Benzoyl oder ein gegebenenfalls weitersubstituierter Halogentriazinylrest ist, 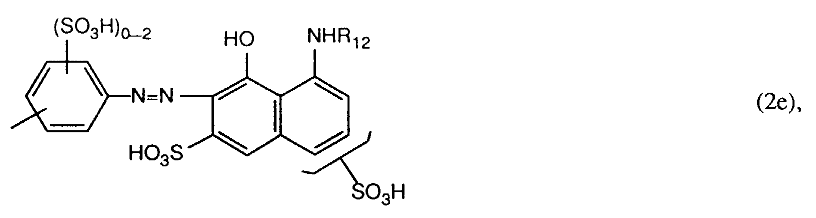 worin R₁₂ C₁-C₄-Alkanoyl, Benzoyl oder ein gegebenenfalls weitersubstituierter Halogentriazinylrest ist, 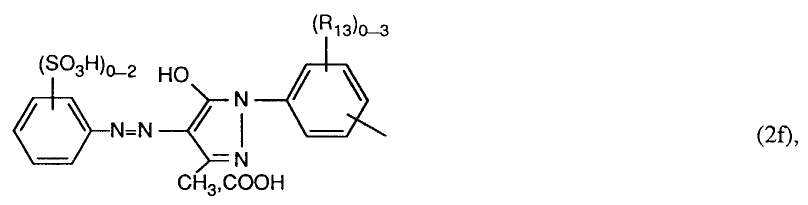 worin R₁₃ für 0 bis 3 gleiche oder verschiedene Substituenten aus der Gruppe C₁-C₄-Alkyl, C₁-C₄-Alkoxy, Halogen, Carboxy und Sulfo steht, oder 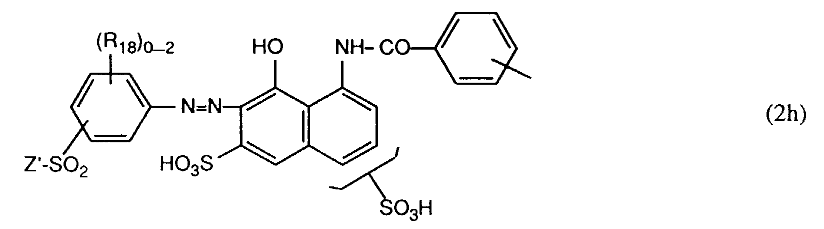 worin R₁₈ für 0 bis 2 gleiche oder verschiedene Substituenten aus der Gruppe C₁-C₄-Alkyl, C₁-C₄-Alkoxy, Halogen, Carboxy und Sulfo steht; und Z' β-Sulfatoäthyl, β-Thiosulfatoäthyl, β-Phosphatoäthyl, β-Acyloxyäthyl, β-Halogenäthyl oder Vinyl ist, bedeutet, und
A₂ die oben für A₁ angegebenen Bedeutungen hat oder einen Rest der Formel 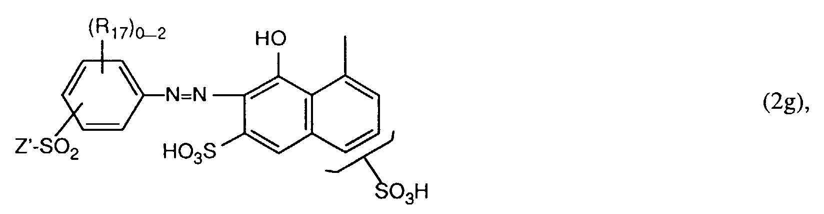 worin R₁₈ für 0 bis 2 gleiche oder verschiedene Substituenten aus der Gruppe C₁-C₄-Alkyl, C₁-C₄-Alkoxy, Halogen, Carboxy und Sulfo steht; und Z' β-Sulfatoäthyl, β-Thiosulfatoäthyl, β-Phosphatoäthyl, β-Acyloxyäthyl, β-Halogenäthyl oder Vinyl ist, 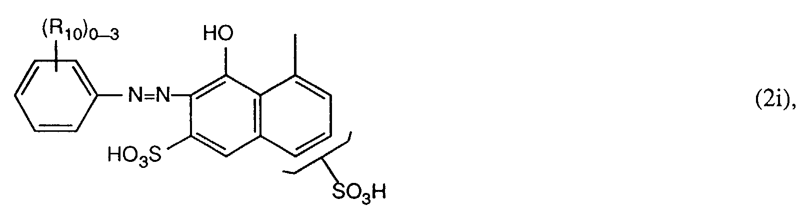 worin R₁₀ für 0 bis 3 gleiche oder verschiedene Substituenten aus der Gruppe C₁-C₄-Alkyl, C₁-C₄-Alkoxy, Halogen, Carboxy und Sulfo steht, 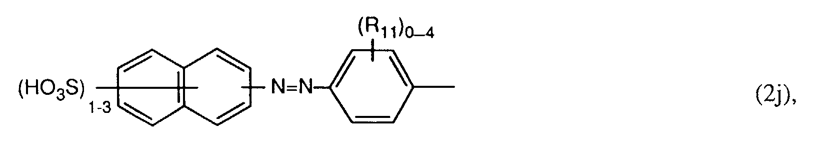 worin R₁₁ für 0 bis 4 gleiche oder verschiedene Substituenten aus der Gruppe Halogen, Nitro, Cyan, Trifluormethyl, Sulfamoyl, Carbamoyl, C₁-C₄-Alkyl, C₁-C₄-Alkoxy, Amino, Acetylamino, Ureido, Hydroxy, Carboxy, Sulfomethyl und Sulfo steht, 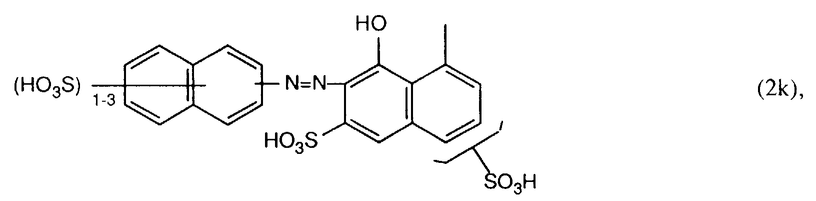 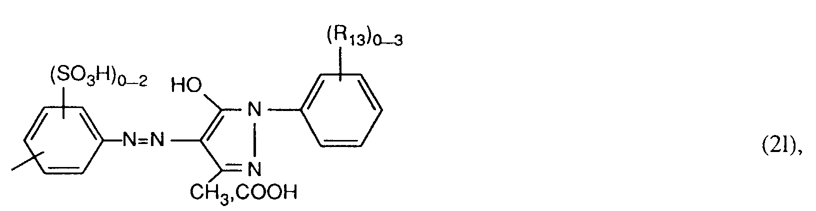 worin R₁₃ für 0 bis 3 gleiche oder verschiedene Substituenten aus der Gruppe C₁-C₄-Alkyl, C₁-C₄-Alkoxy, Halogen, Carboxy und Sulfo steht, oder 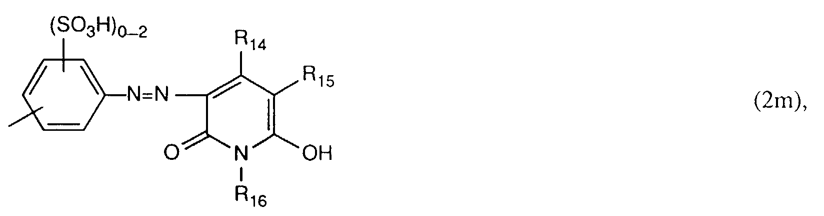 worin R₁₄ und R₁₆ unabhängig voneinander Wasserstoff, C₁-C₄-Alkyl oder Phenyl, und
R₁₅ Wasserstoff, Cyano, Carbamoyl oder Sulfomethyl ist,
bedeutet, wobei
A₁ und A₂ voneinander verschiedene Bedeutungen haben.

2. Reaktivfarbstoffe gemäss Anspruch 1, dadurch gekennzeichnet, dass Y₁ und Y₂ unabhängig voneinander Fluor oder Chlor bedeuten.

3. Reaktivfarbstoffe gemäss einem der Ansprüche 1 und 2, dadurch gekennzeichnet, dass R₁, R₂, R₃ und R₄ unabhängig voneinander Wasserstoff, Methyl oder Aethyl, insbesondere Wasserstoff, sind.

4. Reaktivfarbstoffe gemäss einem der Ansprüche 1 bis 3, dadurch gekennzeichnet, dass B ein C₂-C₁₂-Alkylenrest ist, welcher durch 1, 2 oder 3 Glieder aus der Gruppe -NH-, -N(CH₃)- oder -O- unterbrochen sein kann und unsubstituiert oder durch Hydroxyl, Sulfo oder Sulfato substituiert ist.

5. Reaktivfarbstoffe gemäss einem der Ansprüche 1 bis 4, dadurch gekennzeichnet, dass B ein C₂-C₁₂-Alkylenrest ist, welcher durch 1, 2 oder 3 Reste -O- unterbrochen sein kann.

6. Reaktivfarbstoffe gemäss einem der Ansprüche 1 bis 5, dadurch gekennzeichnet, dass B ein C₂-C₆-Alkylenrest ist.

7. Reaktivfarbstoffe gemäss einem der Ansprüche 1 bis 6, dadurch gekennzeichnet, dass A₁ und A₂ Reste eines Anthrachinon-, Formazan- oder Disazofarbstoffes oder Reste der Formeln (2a) bis (2h) sind und A₁ und A₂ voneinander verschiedene Bedeutungen haben.

8. Reaktivfarbstoffe gemäss einem der Ansprüche 1 bis 7, dadurch gekennzeichnet, dass A₁ und A₂ voneinander verschiedene Reste der Formeln (2a) bis (2h), der Formel 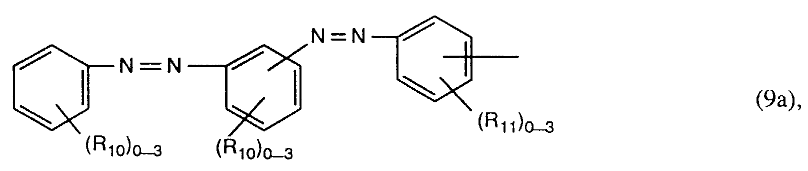 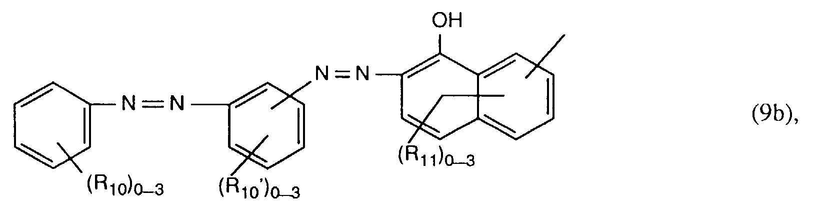 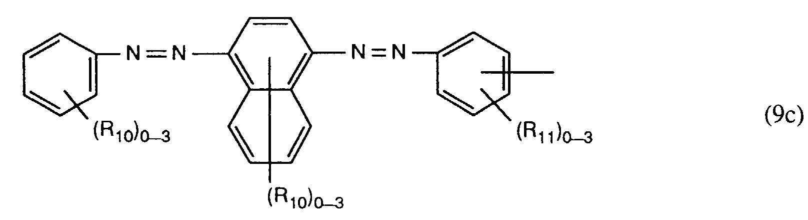 oder 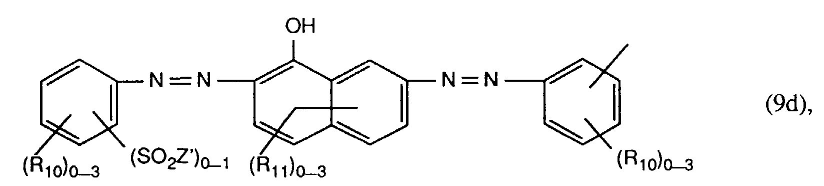 worin R₁₀ für 0 bis 3 gleiche oder verschiedene Substituenten aus der Gruppe C₁-C₄-Alkyl, C₁-C₄-Alkoxy, Halogen, Carboxy und Sulfo, R₁₀' die für R₁₀ angegebenen Bedeutungen hat und zusätzlich C₁-C₄-Hydroxyalkoxy oder C₁-C₄-Sulfatoalkoxy bedeuten kann, R₁₁ für 0 bis 3 gleiche oder verschiedene Substituenten aus der Gruppe Halogen, Nitro, Cyan, Trifluormethyl, Sulfamoyl, Carbamoyl, C₁-C₄-Alkyl, C₁-C₄-Alkoxy, Amino, Acetylamino, Ureido, Hydroxy, Carboxy, Sulfomethyl und Sulfo steht und Z' β-Sulfatoäthyl, β-Thiosulfatoäthyl, β-Phosphatoäthyl, β-Acyloxyäthyl, β-Halogenäthyl oder Vinyl ist, 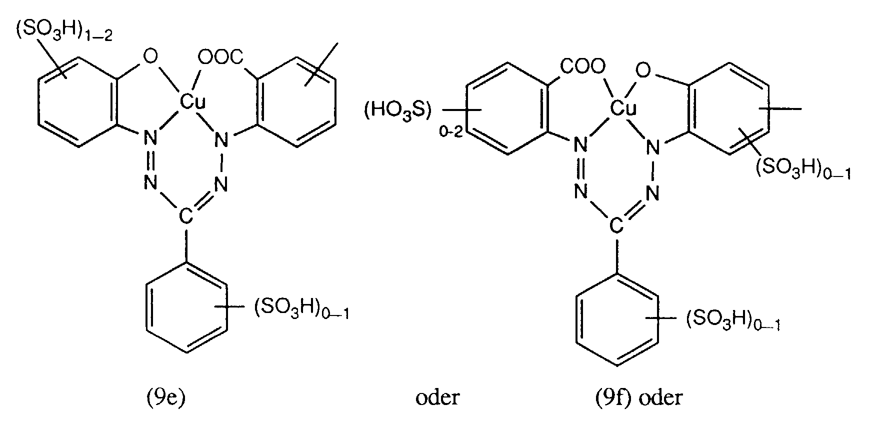 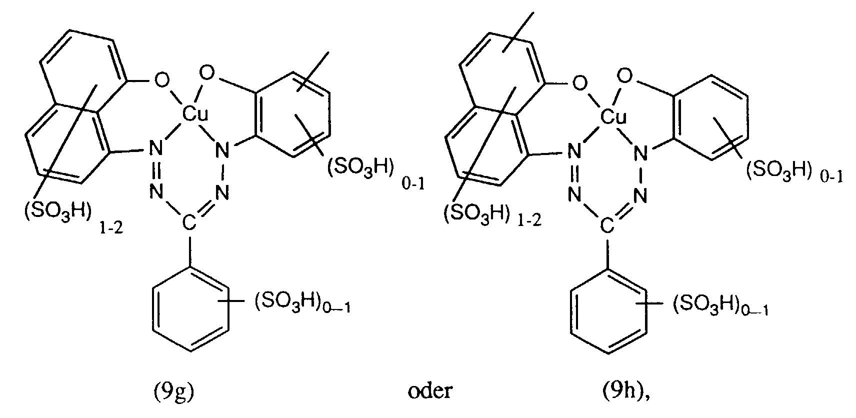 worin die Benzolkerne keine weiteren Substituenten enthalten oder durch C₁-C₄-Alkyl, C₁-C₄-Alkoxy, C₁-C₄-Alkylsulfonyl, Halogen oder Carboxy weitersubstituiert sind, oder der Formel 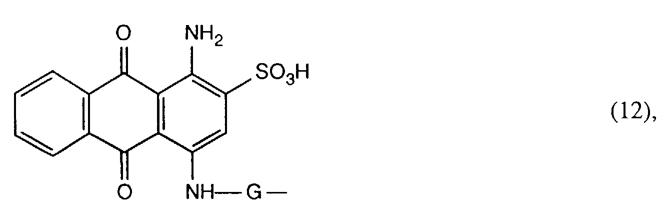 worin G ein Phenylen-, Cyclohexylen-, Phenylenmethylen- oder C₂-C₆-Alkylenrest ist, wobei der Anthrachinonkern durch eine weitere Sulfogruppe, und G als Phenylrest unsubstituiert oder C₁-C₄-Alkyl, C₁-C₄-Alkoxy, Halogen, Carboxy oder Sulfo substituiert ist, sind.

9. Reaktivfarbstoffe gemäss Anspruch 8, dadurch gekennzeichnet, dass A₁ ein Rest der Formeln (9a) bis (9h) oder (12) ist und A₂ die in Anspruch 8 angegebenen Bedeutungen hat.

10. Reaktivfarbstoffe gemäss einem der Ansprüche 1 bis 9, dadurch gekennzeichnet, dass die Reste A₁ und A₂ jeweils mindestens eine Sulfogruppe enthalten.

11. Verfahren zur Herstellung von Reaktivfarbstoffen gemäss Anspruch 1, dadurch gekennzeichnet, dass man Reste der Formeln
A₁-N(R₁)H (13a)
und
A₂-N(R₄)H (13b)
oder entsprechende Farbstoffvorprodukte, mindestens eine Halogentriazinverbindung und ein Diamin der Formel 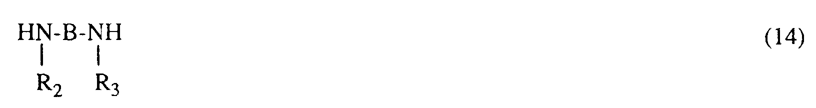 in beliebiger Reihenfolge miteinander umsetzt, wobei A₁, A₂, R₁, R₂, R₃, R₄ und B die in Anspruch 1 angegebenen Bedeutungen haben, oder, im Falle der Verwendung von Farbstoffvorprodukten, die erhaltenen Zwischenprodukte in die gewünschten Farbstoffe überführt und gegebenenfalls eine weitere Umwandlungsreaktion anschliesst.

12. Verwendung der Reaktivfarbstoffe gemäss einem der Ansprüche 1 bis 10 bzw. der gemäss Anspruch 11 hergestellten Reaktivfarbstoffe zum Färben oder Bedrucken von hydroxylgruppenhaltigen oder stickstoffhaltigen Fasermaterialien.

13. Verwendung gemäss Anspruch 12 zum Färben oder Bedrucken von cellulosehaltigen Fasermaterialien oder natürlichen oder synthetischen Polyamidfasermaterialien.

## Revendications

1. Colorants réactifs de formule 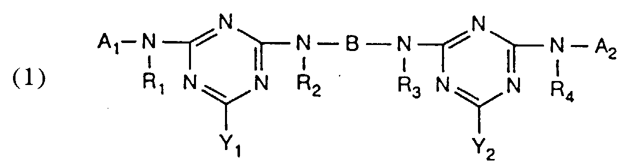 dans laquelle
R₁, R₂, R₃ et R₄ représentent, indépendamment les uns des autres, un atome d'hydrogène ou un groupe alkyle en C₁₋₄ éventuellement substitué,
B représente un élément pontant aliphatique,
Y₁ et Y₂ représentent indépendamment l'un de l'autre un atome d'halogène ou un groupe carboxypyridinium,
A₁ représente le résidu d'un colorant anthraquinonique, d'un colorant formazan ou d'un colorant diazoïque, ou un résidu de formule 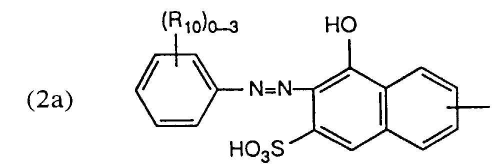 dans laquelle R₁₀ représente de 0 à 3 substituants, identiques ou différents, choisis dans le groupe formé par les résidus alkyle en C₁₋₄, alcoxy en C₁₋₄, halogéno, carboxy et sulfo, 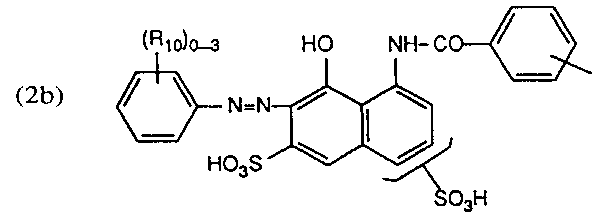 dans laquelle R₁₀ représente de 0 à 3 substituants, identiques ou différents, choisis dans le groupe formé par les résidus alkyle en C₁₋₄, alcoxy en C₁₋₄, halogéno, carboxy et sulfo, 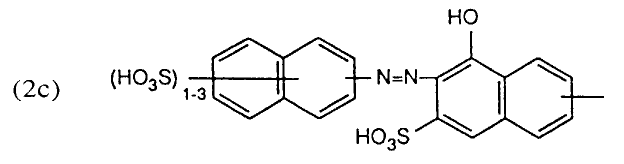 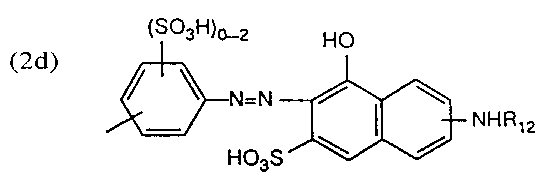 dans lesquelles R₁₂ représente un résidu alcanoyle en C₁₋₄, benzoyle ou un résidu halogénotriazinyle éventuellement substitué, 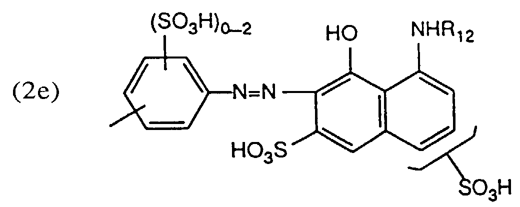 dans laquelle R₁₂ représente un résidu alcanoyle en C₁₋₄, benzoyle ou un résidu halogénotriazinyle éventuellement substitué, 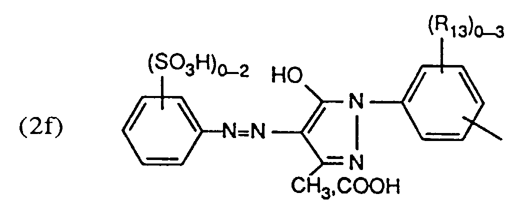 dans laquelle R₁₃ représente de 0 à 3 substituants, identiques ou différents, choisis dans le groupe formé par les résidus alkyle en C₁₋₄, alcoxy en C₁₋₄, halogéno, carboxy et sulfo, 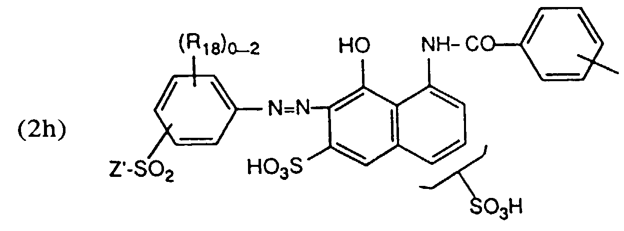 dans laquelle R₁₈ représente de 0 à 2 substituants, identiques ou différents, choisis dans le groupe formé par les résidus alkyle en C₁₋₄, alcoxy en C₁₋₄, halogéno, carboxy et sulfo, et Z' représente un groupe β-sulfatoéthyle, β-thiosulfatoéthyle, β-phosphatoéthyle, β-acyloxyéthyle, β-halogénoéthyle ou vinyle, et A₂ a la signification indiquée ci-dessus pour A₁, ou un résidu de formule 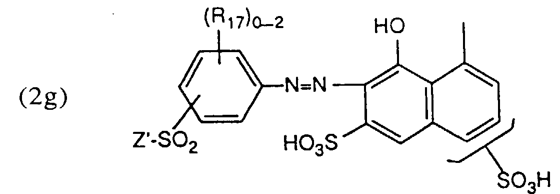 dans laquelle R₁₇ représente de 0 à 2 substituants, identiques ou différents, choisis dans le groupe formé par les résidus alkyle en C₁₋₄, alcoxy en C₁₋₄, halogéno, carboxy et sulfo, et Z' représente un groupe β-sulfatoéthyle, β-thiosulfatoéthyle, β-phosphatoéthyle, β-acyloxyéthyle, β-halogénoéthyle ou vinyle, 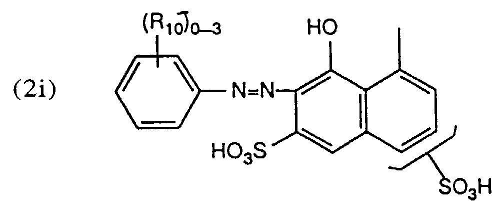 dans laquelle R₁₀ représente de 0 à 3 substituants, identiques ou différents, choisis dans le groupe formé par les résidus alkyle en C₁₋₄, alcoxy en C₁₋₄, halogéno, carboxy et sulfo, 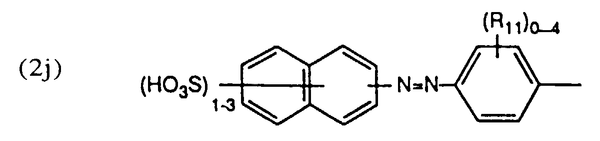 dans laquelle R₁₁ représente de 0 à 4 substituants identiques ou différents choisis dans le groupe formé par les radicaux halogéno, nitro, cyano, trifluorométhyle, sulfamoyle, carbamoyle, alkyle en C₁₋₄, alcoxy en C₁₋₄, amino, acétylamino, uréido, hydroxy, carboxy, sulfométhyle et sulfo, 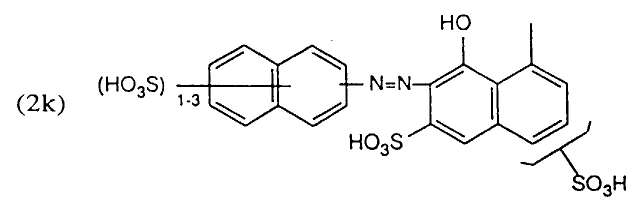 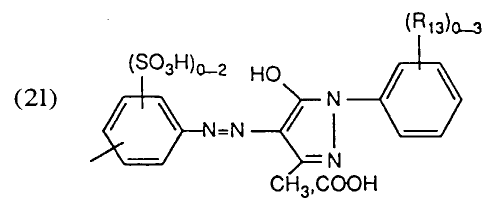 dans laquelle R₁₃ représente de 0 à 3 substituants, identiques ou différents, choisis dans le groupe formé par les résidus alkyle en C₁₋₄, alcoxy en C₁₋₄, halogéno, carboxy et sulfo, ou 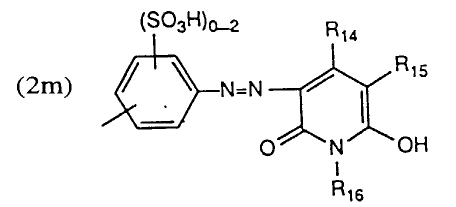 dans laquelle R₁₄ et R₁₆ représentent, indépendamment l'un de l'autre, un atome d'hydrogène, un groupe alkyle en C₁₋₄ ou phényle et R₁₅ représente un atome d'hydrogène, un groupe cyano, carbamoyle ou sulfométhyle, A₁ et A₂ ayant des significations différentes.

2. Colorants réactifs selon la revendication 1, caractérisés en ce que Y₁ et Y₂ représentent, indépendamment l'un de l'autre, un atome de fluor ou de chlore.

3. Colorants réactifs selon une des revendications 1 à 2, caractérisés en ce que R₁, R₂, R₃ et R₄ représentent indépendamment l'un de l'autre un atome d'hydrogène, un groupe méthyle ou éthyle, en particulier un atome d'hydrogène.

4. Colorants réactifs selon une des revendications 1 à 3, caractérisés en ce que B représente un résidu alkylène en C₂₋₁₂ pouvant être interrompu par 1, 2 ou 3 groupes choisis parmi -NH-, -N(CH₃)- ou -O- et qui est non substitué ou porte un ou plusieurs substituants hydroxyle, sulfo ou sulfato.

5. Colorants réactifs selon une des revendications 1 à 4, caractérisés en ce que B représente un résidu alkylène en C₁₋₁₂ pouvant être interrompu par 1, 2 ou 3 résidus -O-.

6. Colorants réactifs selon une des revendications 1 à 5, caractérisés en ce que B représente un résidu alkylène en C₂₋₆.

7. Colorants réactifs selon une des revendications 1 à 6, caractérisés en ce que A₁ et A₂ sont des résidus d'un colorant anthraquinonique, formazan ou diazoïque ou des résidus de formule (2a) à (2f) ou (2h) et A₁ et A₂ ont des significations différentes.

8. Colorants réactifs selon une des revendications 1 à 7, caractérisés en ce que A₁ et A₂ représentent des résidus différents de formule (2a) à (2f) ou (2h) ou de formule 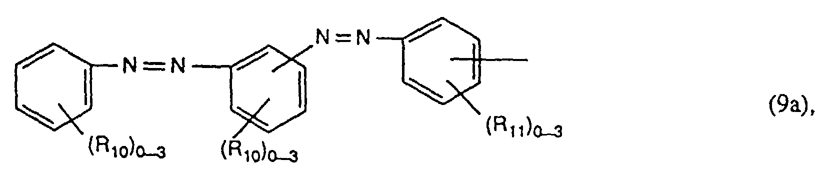 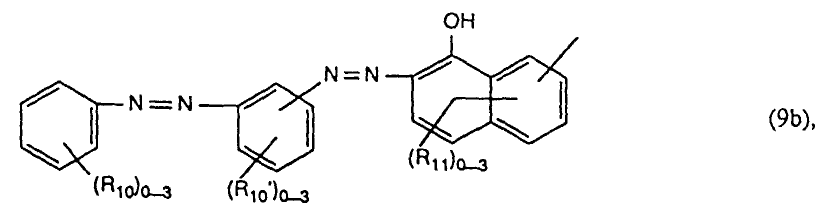 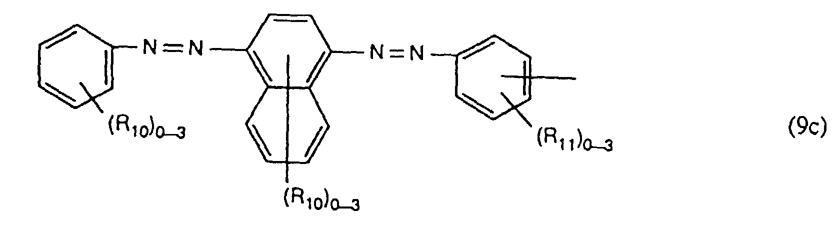 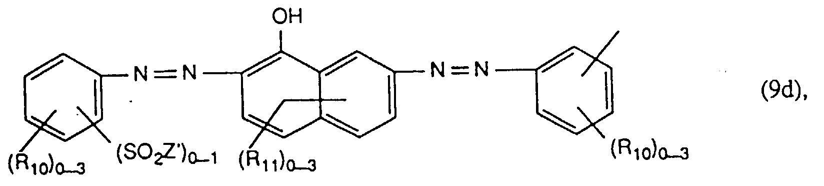 où R₁₀ représente de 0 à 3 résidus, identiques ou différents, choisis parmi alkyle en C₁₋₄, alcoxy en C₁₋₄, halogéno, carboxy et sulfo; R₁₀' a la signification indiquée pour R₁₀ et peut être en outre un groupe hydroxyalcoxy en C₁₋₄ ou sulfatoalcoxy en C₁₋₄, R₁₁ représente de 0 à 3 substituants, identiques ou différents, choisis parmi halogéno, nitro, cyano, trifluorométhyle, sulfamoyle, carbamoyle, alkyle en C₁₋₄, alcoxy en C₁₋₄, amino, acétylamino, uréido, hydroxy, carboxy, sulfométhyle et sulfo et Z' représente un groupe β-sulfatoéthyle, β-thiosulfatoéthyle, β-phosphatoéthyle, β-acyloxyéthyle, β-halogénoéthyle ou vinyle, 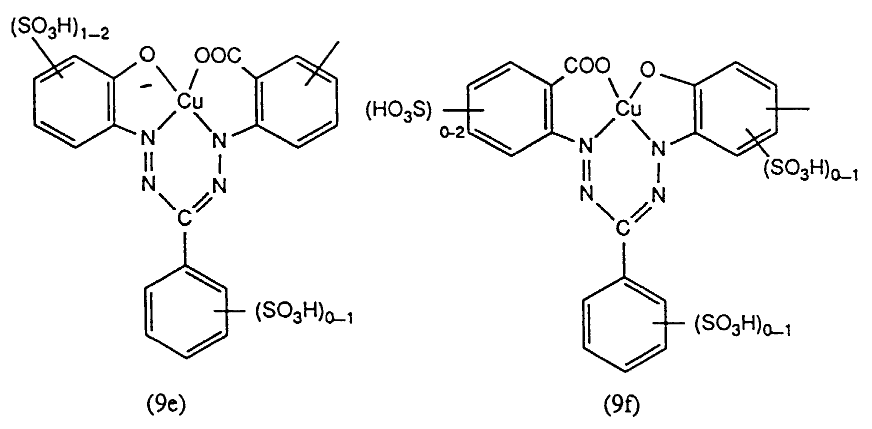 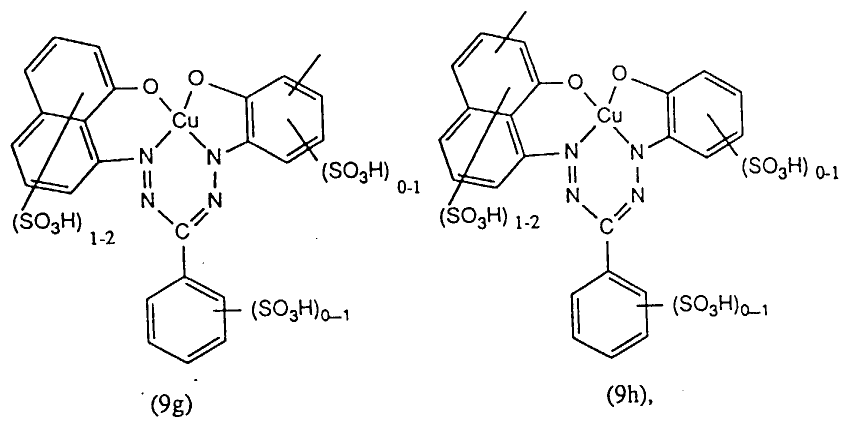 dans lesquelles les noyaux benzéniques ne contiennent pas d'autres substituants ou portent des substituants alkyle en C₁₋₄, alcoxy en C₁₋₄, alkylsulfonyle en C₁₋₄, halogéno ou carboxy,
ou de formule 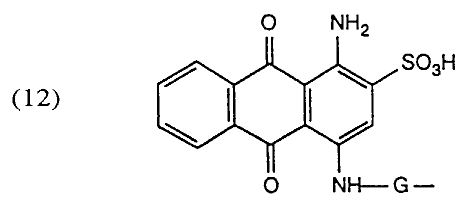 dans laquelle G représente un résidu phénylène, cyclohexylène, phénylèneméthylène ou alkylène en C₂₋₆, le noyau anthraquinonique pouvant porter un autre groupe sulfo, et G dans la signification d'un résidu phénylène pouvant porter un ou plusieurs substituants alkyle en C₁₋₄, alcoxy en C₁₋₄, halogéno, carboxy ou sulfo.

9. Colorants réactifs selon la revendication 8, caractérisés en ce que A₁ est un résidu de formule (9a) à (9h) ou (12) et A₂ a la signification indiquée dans la revendication 8.

10. Colorants réactifs selon une des revendications 1 à 9, caractérisés en ce que les résidus A₁ et A₂ contiennent au moins un groupe sulfo.

11. Procédé de préparation de colorants réactifs selon la revendication 1, caractérisé en ce que l'on fait réagir, dans n'importe quel ordre, des composés de formule
(13a) A₁-N(R₁)H
et
(13b) A₂-N(R₄)H
ou des précurseurs de colorants correspondants, au moins un composé de type halogénotriazine et une diamine de formule 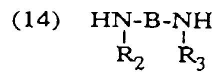 A₁, A₂, R₁, R₂, R₃, R₄ et B ayant la signification indiquée dans la revendication 1, ou, dans le cas où l'on utilise un précurseur de colorant, en ce que l'on convertit les produits intermédiaires obtenus en les colorants désirés et en ce que l'on fait suivre éventuellement une autre réaction de conversion.

12. Utilisation des colorants réactifs selon une des revendications 1 à 10 ou préparé selon la revendication 11 pour la teinture ou l'impression de matériaux fibreux contenant de groupes hydroxyle ou des atomes d'azote.

13. Utilisation selon la revendication 12 pour la teinture ou l'impression de matériaux fibreux contenant de la cellulose ou de matériaux fibreux en polyamide naturel ou synthétique.

## Claims

1. A reactive dye of the formula 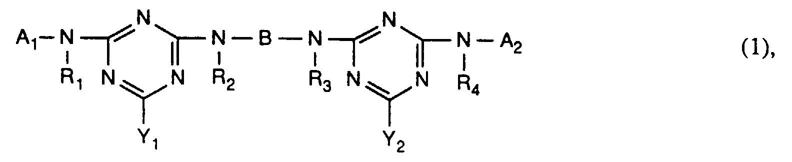 in which
R₁, R₂, R₃ and R₄ independently of one another are hydrogen or substituted or unsubstituted C₁-C₄alkyl,
B is an aliphatic bridge member,
Y₁ and Y₂ independently of one another are halogen or carboxypyridinium,
A₁ is the radical of an anthraquinone, formazan or disazo dye, or a radical of the formula 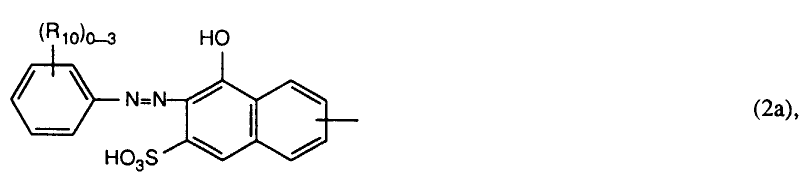 in which R₁₀ is 0 to 3 identical or different substituents from the group comprising C₁-C₄alkyl, C₁-C₄alkoxy, halogen, carboxyl and sulfo, 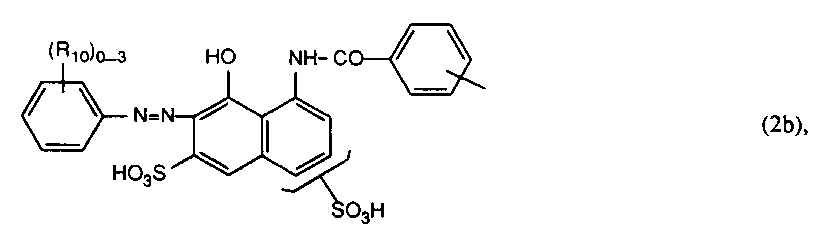 in which R₁₀ is 0 to 3 identical or different substituents from the group comprising C₁-C₄alkyl, C₁-C₄alkoxy, halogen, carboxyl and sulfo, 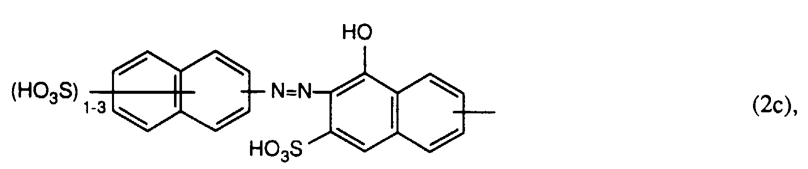 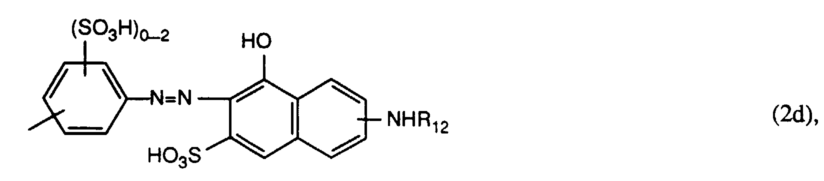 in which R₁₂ is C₁-C₄alkanoyl, benzoyl or a halotriazinyl radical, which may be further substituted, 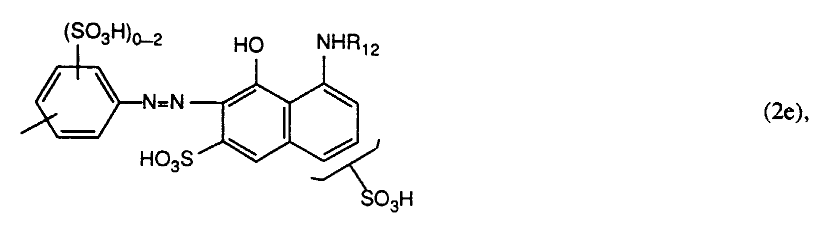 in which R₁₂ is C₁-C₄alkanoyl, benzoyl or a halotriazinyl radical, which may be further substituted, 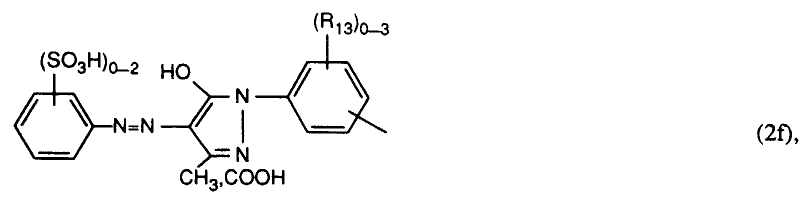 in which R₁₃ is 0 to 3 identical or different substituents from the group comprising C₁-C₄alkyl, C₁-C₄alkoxy, halogen, carboxyl and sulfo, or 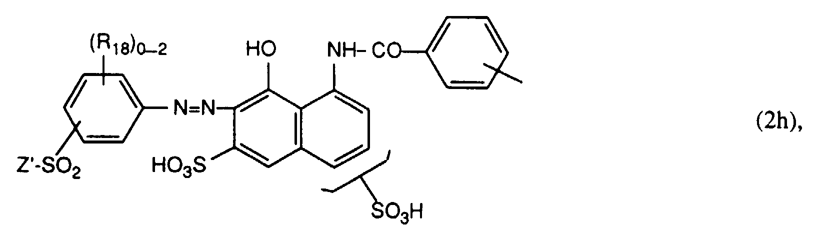 in which R₁₈ is 0 to 2 identical or different substituents from the group comprising C₁-C₄akyl, C₁-C₄alkoxy, halogen, carboxyl and sulfo; and Z' is β-sulfatoethyl, β-thiosulfatoethyl, β-phosphatoethyl, β-acyloxyethyl, β-haloethyl or vinyl, and
A₂ is as defined above for A₁ or is a radical of the formula 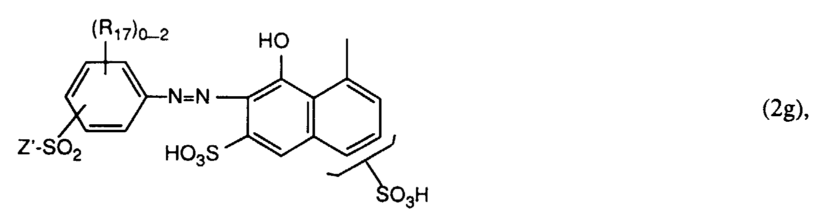 in which R₁₇ is 0 to 2 identical or different substituents from the group comprising C₁-C₄akyl, C₁-C₄alkoxy, halogen, carboxyl and sulfo; and
Z' is β-sulfatoethyl, β-thiosulfatoethyl, β-phosphatoethyl, β-acyloxyethyl, β-haloethyl or vinyl, 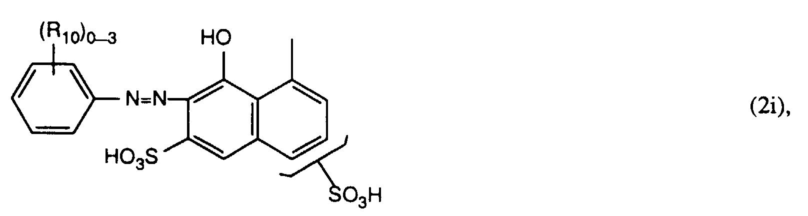 in which R₁₀ is 0 to 3 identical or different substituents from the group comprising C₁-C₄akyl, C₁-C₄alkoxy, halogen, carboxyl and sulfo, 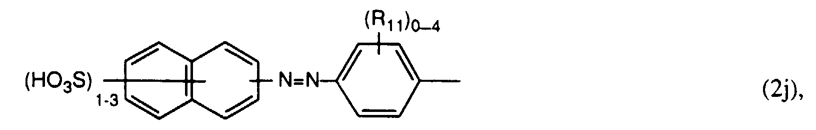 in which R₁₁ is 0 to 4 identical or different substituents from the group comprising halogen, nitro, cyano, trifluoromethyl, sulfamoyl, carbamoyl, C₁-C₄alkyl, C₁-C₄alkoxy, amino, acetylamino, ureido, hydroxyl, carboxyl, sulfomethyl and sulfo, 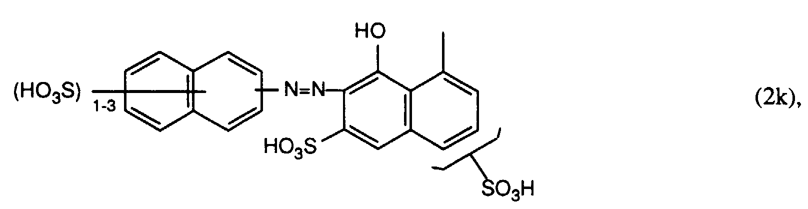 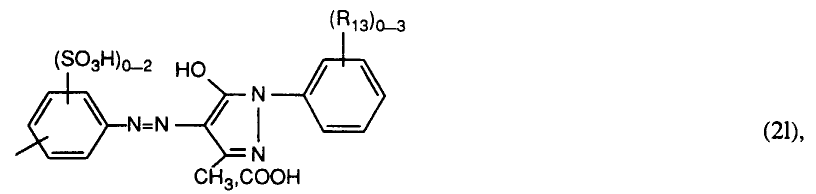 in which R₁₃ is 0 to 3 identical or different substituents from the group comprising C₁-C₄akyl, C₁-C₄alkoxy, halogen, carboxyl and sulfo, or 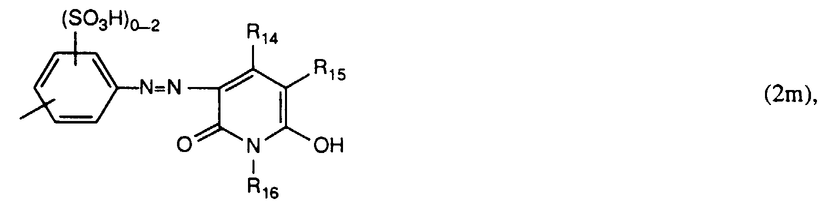 in which R₁₄ and R₁₆ independently of one another are hydrogen, C₁-C₄alkyl or phenyl, and
R₁₅ is hydrogen, cyano, carbamoyl or sulfomethyl,
where A₁ and A₂ have different meanings to one another.

2. A reactive dye according to claim 1, in which Y₁ and Y₂ independently of one another are fluorine or chlorine.

3. A reactive dye according to claim 1 or 2, in which R₁, R₂, R₃ and R₄ independently of one another are hydrogen, methyl or ethyl, in particular hydrogen.

4. A reactive dye according to any one of claims 1 to 3, in which B is a C₂-C₁₂alkylene radical which can be interrupted by 1, 2 or 3 members from the group comprising -NH-, -N(CH₃)- and -O- and is unsubstituted or substituted by hydroxyl, sulfo or sulfato.

5. A reactive dye according to any one of claims 1 to 4, in which B is a C₂-C₁₂alkylene radical, which can be interrupted by 1, 2 or 3 -O- radicals.

6. A reactive dye according to any one of claims 1 to 5, in which B is a C₂-C₆alkylene radical.

7. A reactive dye according to any one of claims 1 to 6, in which A₁ and A₂ are radicals of an anthraquinone, formazan or disazo dye or radicals of the formulae (2a) to (2f) or (2h) and A₁ and A₂ have different meanings to one another.

8. A reactive dye according to any one of claims 1 to 7, in which A₁ and A₂ are different radicals of the formulae (2a) to (2f) or (2h), or of the formula 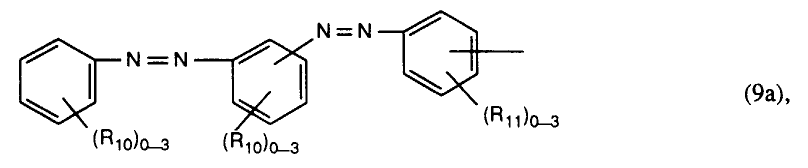 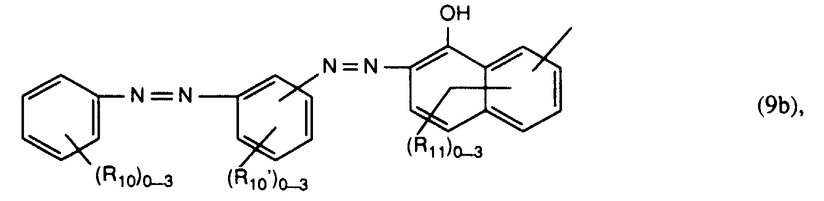 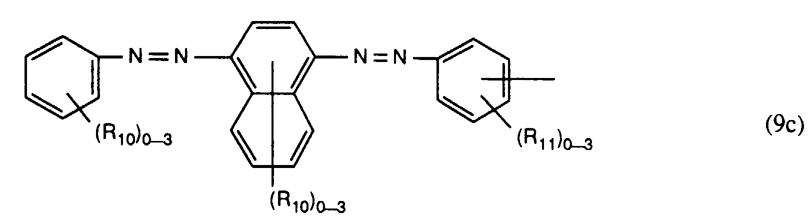 or 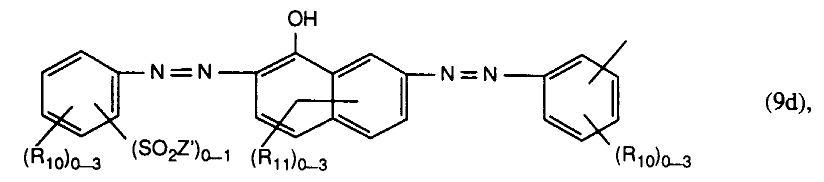 in which
R₁₀ is 0 to 3 identical or different substituents from the group comprising C₁-C₄alkyl, C₁-C₄alkoxy, halogen, carboxyl and sulfo,
R₁₀' is as defined for R₁₀ and can additionally be C₁-C₄hydroxyalkoxy or C₁-C₄sulfatoalkoxy,
R₁₁ is 0 to 3 identical or different substituents from the group comprising halogen, nitro, cyano, trifluoromethyl, sulfamoyl, carbamoyl, C₁-C₄alkyl, C₁-C₄alkoxy, amino, acetylamino, ureido, hydroxyl, carboxyl, sulfomethyl and sulfo and
Z' is β-sulfatoethyl, β-thiosulfatoethyl, β-phosphatoethyl, β-acyloxyethyl, β-haloethyl or vinyl, 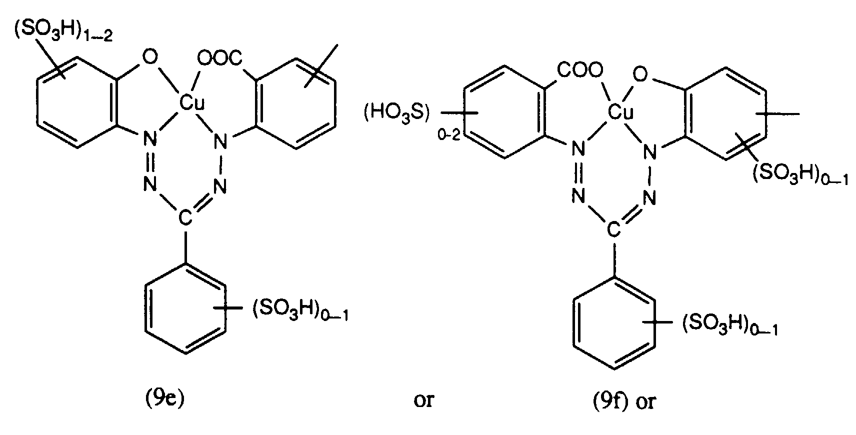 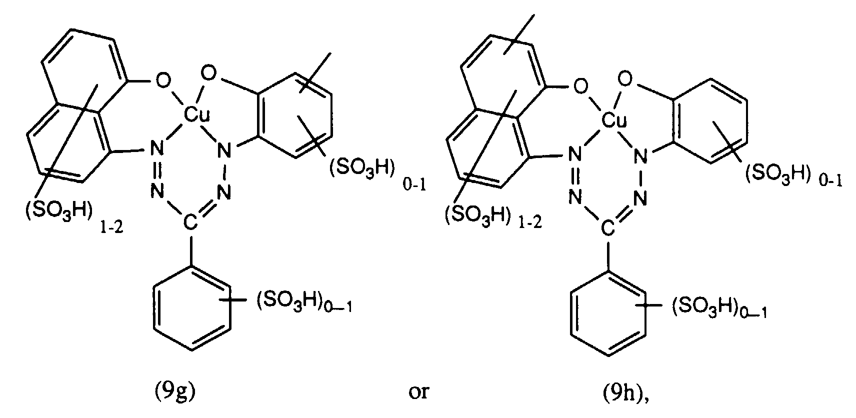 in which the benzene nuclei contain no further substituents or are further substituted by C₁-C₄alkyl, C₁-C₄alkoxy, C₁-C₄alkylsulfonyl, halogen or carboxyl, or of the formula 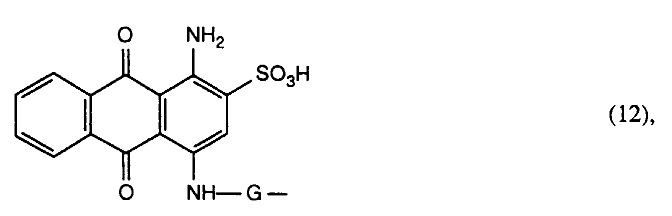 in which G is a phenylene, cyclohexylene, phenylenemethylene or C₂-C₆-alkylene radical, and in which the anthraquinone nucleus can be substituted by a further sulfo group and G as the phenyl radical is unsubstituted or substituted by C₁-C₄alkyl, C₁-C₄alkoxy, halogen, carboxyl or sulfo.

9. A reactive dye according to claim 8, in which A₁ is a radical of the formulae (9a) to (9h) or (12) and A₂ is as defined in claim 8.

10. A reactive dye according to any one of claims 1 to 9, in which the radicals A₁ and A₂ in each case contain at least one sulfo group.

11. A process for the preparation of a reactive dye according to claim 1, which comprises reacting radicals of the formulae
A₁-N(R₁)H (13a)
and
A₂-N(R₄)H (13b)
or corresponding dye precursors, at least one halotriazine compound and one diamine of the formula 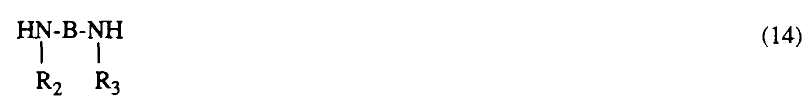 in which A₁, A₂, R₁, R₂, R₃, R₄ and B are as defined in claim 1,
with one another in any sequence, or, if dye precursors are used, converting the resulting intermediates into the desired dyes, and if appropriate then carrying out a further conversion reaction.

12. The use of a reactive dye according to any one of claims 1 to 10 or of a reactive dye prepared according to claim 11 for dyeing or printing fibre materials containing hydroxyl groups or containing nitrogen.

13. The use according to claim 12 for dyeing or printing cellulosic fibre materials or natural or synthetic polyamide fibre materials.
